# EUROPEAN PATENT APPLICATION

(11) **EP 4 804 713 A1**
(43) Date of publication of application: **09.09.2026**
(21) Application number: 24896485.0
(22) Date of filing: 25.11.2024
(51) Int. Cl.: H04W 76/10

(54) **COMMUNICATION METHOD AND APPARATUS**

(30) Priority: 27.11.2023 CN 202311603343
(71) Applicant: Huawei Technologies Co., Ltd., Shenzhen, Guangdong 518129 (CN)
(72) Inventor: GUO, Yanfei, Shenzhen, Guangdong 518129 (CN); WU, Yizhuang, Shenzhen, Guangdong 518129 (CN); GE, Cuili, Shenzhen, Guangdong 518129 (CN); LI, He, Shenzhen, Guangdong 518129 (CN)
(74) Representative: Grünecker Patent- und Rechtsanwälte PartG mbB
(86) International application number: PCT/CN2024/134341
(87) International publication number: WO 2025/113396

(57) **Abstract**

A communication method and apparatus are provided, to implement a security solution in a process in which a terminal apparatus establishes an MPQUIC connection to a user plane function. In this application, the method includes: After establishment of a first MA PDU session of a first terminal apparatus is completed, the first terminal apparatus negotiates with a first user plane function to establish a first MPQUIC connection, where the first MPQUIC connection is associated with the first MA PDU session. The first terminal apparatus derives, based on a preconfigured key, a key for protecting data of the first MPQUIC connection, where the data of the first MPQUIC connection is transmitted on a plurality of paths between the first terminal apparatus and the first user plane function. The preconfigured key is further used by the first terminal apparatus to establish a second MPQUIC connection to a second user plane function, and the first user plane function and the second user plane function are located in a same public land mobile network.

## Description

### CROSS-REFERENCE TO RELATED APPLICATIONS

This application claims priority to Chinese Patent Application No. 202311603343.2, filed with the China National Intellectual Property Administration on November 27, 2023 and entitled "COMMUNICATION METHOD AND APPARATUS", which is incorporated herein by reference in its entirety.

### TECHNICAL FIELD

Embodiments of this application relate to the wireless communication field, and in particular, to a communication method and apparatus.

### BACKGROUND

When a terminal apparatus uses an access traffic steering, switching, and splitting (access traffic steering, switching, and splitting, ATSSS) function, the terminal apparatus establishes a multiple access protocol data unit (multiple access protocol data unit, MA PDU) session with a user plane function (user plane function, UPF). Such a session supports a plurality of access paths (for example, including a path accessed through 3GPP and a path accessed through non-3GPP), and data may be transmitted on different access paths. The ATSSS function further supports a multipath quick user datagram protocol internet connection (multipath quick user datagram protocol internet connection, MPQUIC) function. In other words, the terminal apparatus supports establishment, with the user plane function, of an MPQUIC connection associated with the MA PDU session.

In a process in which the terminal apparatus and the user plane function establish the MPQUIC connection, how to implement a security solution is a problem that urgently needs to be resolved currently.

### SUMMARY

This application provides a communication method and apparatus, to implement a security solution in a process in which a terminal apparatus establishes an MPQUIC connection to a user plane function.

According to a first aspect, this application provides a communication method. The communication method is performed by a first terminal apparatus, and the first terminal apparatus may be a terminal device or a module (for example, a chip) in the terminal device.

The method includes: After establishment of a first MA PDU session of the first terminal apparatus is completed, the first terminal apparatus negotiates with a first user plane function to establish a first MPQUIC connection, where the first MPQUIC connection is associated with the first MA PDU session. The first terminal apparatus derives, based on a preconfigured key, a key for protecting data of the first MPQUIC connection, where the data of the first MPQUIC connection is transmitted on a plurality of paths between the first terminal apparatus and the first user plane function. The preconfigured key is further used by the first terminal apparatus to establish a second MPQUIC connection to the second user plane function, and the first user plane function and the second user plane function are located in a same public land mobile network.

In the foregoing technical solution, after establishment of the first MA PDU session of the first terminal apparatus is completed, the first terminal apparatus establishes the first MPQUIC connection based on the preconfigured key, and security is implemented in the process in which the first terminal apparatus establishes the first MPQUIC connection to the first user plane function. Further, the preconfigured key is not only used by the first terminal apparatus to establish the first MPQUIC connection to the first user plane function, but also used by the first terminal apparatus to establish the second MPQUIC connection to the second user plane function. The first user plane function and the second user plane function are located in a same public land mobile network. In other words, the preconfigured key may be used by the first terminal apparatus to establish MPQUIC connections to a plurality of user plane functions located in a same public land mobile network, reducing complexity of establishing an MPQUIC connection by the first terminal apparatus.

In a possible implementation, that the first terminal apparatus negotiates with the first user plane function to establish the first MPQUIC connection may be specifically: The first terminal apparatus sends an identifier of the preconfigured key to the first user plane function.

In the foregoing technical solution, the first terminal apparatus sends the identifier of the preconfigured key to the first user plane function, to negotiate with the first user plane function to establish the first MPQUIC connection. This facilitates compatibility with a manner of connection establishment between a client and a server in an existing transport layer security (transport layer security, TLS) protocol. Herein, the client is equivalent to the first terminal apparatus, and the server is equivalent to the first user plane function.

In a possible implementation, a message transmitted during the negotiation is protected based on 3GPP security.

In the foregoing technical solution, before the first terminal apparatus establishes the MPQUIC connection to the first user plane function, the first MA PDU session of the first terminal apparatus has been established, that is, 3GPP security protection has been established, and a message transmitted between the first terminal apparatus and the first user plane function may be protected based on the 3GPP security protection. This helps improve message transmission security.

In a possible implementation, the preconfigured key used when the first terminal apparatus and the first user plane function negotiate to establish the first MPQUIC connection is the same as a preconfigured key used when a second terminal apparatus and the first user plane function negotiate to establish a third MPQUIC connection. The first terminal apparatus and the second terminal apparatus belong to a same home public land mobile network.

In the foregoing technical solution, the preconfigured key may be further used by the second terminal apparatus to establish the third MPQUIC connection to the first user plane function. In other words, the preconfigured key may be used by the first user plane function to establish MPQUIC connections to a plurality of terminal apparatuses located in a same home public land mobile network. In this way, complexity of establishing an MPQUIC connections by the first user plane function is reduced.

In a possible implementation, after establishment of the first MA PDU session of the first terminal apparatus is completed, the first terminal apparatus further negotiates with the first user plane function to establish a fourth MPQUIC connection, where the fourth MPQUIC connection is associated with the first MA PDU session; and the first terminal apparatus derives, based on the preconfigured key, a key for protecting data of the fourth MPQUIC connection, where the key for protecting the data of the first MPQUIC connection is different from the key for protecting the data of the fourth MPQUIC connection.

In the foregoing technical solution, the first MA PDU session may be associated with a plurality of MPQUIC connections, and the first terminal apparatus may derive, for each MPQUIC connection, a key for protecting data of the MPQUIC connection, thereby helping improve data transmission security.

In a possible implementation, after establishment of a second MA PDU session of the first terminal apparatus is completed, the first terminal apparatus further negotiates with the second user plane function to establish the second MPQUIC connection, where the second MPQUIC connection is associated with the second MA PDU session; and the first terminal apparatus derives, based on the preconfigured key, a key for protecting data of the second MPQUIC connection.

According to a second aspect, this application provides a communication method. The communication method is performed by a first user plane function. The first user plane function may be a network element in a hardware device, may be a software function running on dedicated hardware, or may be a virtualized function instantiated on a platform (for example, a cloud platform). Optionally, the first user plane function may be implemented by one device, may be jointly implemented by a plurality of devices, or may be a functional module in a device.

The method includes: After establishment of a first MA PDU session of a first terminal apparatus is completed, the first user plane function negotiates with the first terminal apparatus to establish a first MPQUIC connection, where the first MPQUIC connection is associated with the first MA PDU session; and the first user plane function derives, based on a preconfigured key, a key for protecting data of the first MPQUIC connection, where the data of the first MPQUIC connection is transmitted on a plurality of paths between the first terminal apparatus and the first user plane function. The preconfigured key is further used by the first terminal apparatus to establish a second MPQUIC connection to the second user plane function, and the first user plane function and the second user plane function are located in a same public land mobile network.

In a possible implementation, that the first user plane function negotiates with the first terminal apparatus to establish the first MPQUIC connection may be specifically: The first user plane function receives an identifier of the preconfigured key from the first terminal apparatus.

In a possible implementation, a message transmitted during the negotiation is protected based on 3GPP security.

In a possible implementation, the preconfigured key used when the first user plane function and the first terminal apparatus negotiate to establish the first MPQUIC connection is the same as a preconfigured key used when the first user plane function and a second terminal apparatus negotiate to establish a third MPQUIC connection. The first terminal apparatus and the second terminal apparatus belong to a same home public land mobile network.

In a possible implementation, after establishment of the first MA PDU session of the first terminal apparatus is completed, the first user plane function further negotiates with the first terminal apparatus to establish a fourth MPQUIC connection, where the fourth MPQUIC connection is associated with the first MA PDU session; and the first user plane function derives, based on the preconfigured key, a key for protecting data of the fourth MPQUIC connection, where the key for protecting the data of the first MPQUIC connection is different from the key for protecting the data of the fourth MPQUIC connection.

For technical effects that can be achieved in the second aspect, refer to descriptions of beneficial effects in the first aspect. Details are not described herein again.

According to a third aspect, this application provides a communication method. The communication method is applicable to a process of establishing an MA PDU session for a terminal apparatus. The communication method is performed by a session management function. The session management function may be a network element in a hardware device, may be a software function running on dedicated hardware, or may be a virtualized function instantiated on a platform (for example, a cloud platform). Optionally, the session management function may be implemented by one device, may be jointly implemented by a plurality of devices, or may be a functional module in a device.

The method includes: The session management function obtains a shared key from a first function; and the session management function sends the shared key to a user plane function, where the shared key is for deriving a key for protecting data of an MPQUIC connection between the terminal apparatus and the user plane function, the MPQUIC connection is associated with the MA PDU session, and the data of the MPQUIC connection is transmitted on a plurality of paths between the terminal apparatus and the user plane function.

In the foregoing technical solution, the session management function sends the shared key to the user plane function, and the user plane function may establish the MPQUIC connection to the terminal device based on the shared key, to implement security in the process in which the terminal apparatus establishes the MPQUIC connection to the user plane function.

In a possible implementation, the session management function further sends a first indication to the terminal apparatus, where the first indication indicates to establish the MPQUIC connection in a shared key manner. For example, the first indication indicates the terminal apparatus to establish the MPQUIC connection to the user plane function in a shared key manner. In the foregoing technical solution, the terminal apparatus may obtain the shared key based on the first indication, so that the terminal apparatus establishes the MPQUIC connection to the user plane function based on the shared key, to implement security in the process in which the terminal apparatus establishes the MPQUIC connection to the user plane function.

In a possible implementation, before obtaining the shared key from the first function, the session management function further determines to enable a function corresponding to the MPQUIC connection. In a possible implementation, that the session management function determines to enable the function corresponding to the MPQUIC connection may be specifically: The session management function receives capability information from the terminal apparatus, and determines, based on the capability information of the terminal apparatus, that the terminal apparatus supports establishment of the MPQUIC connection; and/or the session management function determines that the function corresponding to the MPQUIC connection is supported.

In the foregoing technical solution, the session management function may first determine to enable the function corresponding to the MPQUIC connection, and then obtain the shared key from the first function, to provide a determining condition for the session management function to determine that the MPQUIC connection can be established between the terminal apparatus and the user plane function.

In a possible implementation, that the session management function obtains the shared key from the first function may be specifically: The session management function sends a second indication to the first function, where the second indication indicates to derive the shared key; and the session management function receives the shared key from the first function. For example, the second indication indicates the first function to derive the shared key.

In a possible implementation, after obtaining the shared key from the first function, the session management function further sends an identifier of the shared key to the user plane function. In an example, the identifier of the shared key is determined by the session management function based on an identifier of the MA PDU session. Correspondingly, the session management function further sends the identifier of the shared key to the first function, and/or the session management function sends the identifier of the shared key to the terminal apparatus. In another example, the identifier of the shared key is determined by the first function based on an identifier of the MA PDU session. Correspondingly, the session management function sends the identifier of the MA PDU session to the first function, and the session management function further receives the identifier of the shared key from the first function.

In the foregoing technical solution, a manner of obtaining the identifier of the shared key by the session management function is provided.

In a possible implementation, the identifier of the shared key is the identifier of an MA PDU session.

In the foregoing technical solution, because the terminal apparatus records the identifier of the MA PDU session, the session management function does not need to send the identifier of the shared key (that is, the identifier of the MA PDU session) to the terminal apparatus, thereby helping reduce signaling exchange.

In a possible implementation, the first function is an access management function, a security anchor function, or an authentication server function.

According to a fourth aspect, this application provides a communication method. The communication method is applicable to a process of establishing an MA PDU session for a terminal apparatus. The communication method is performed by a user plane function. The user plane function may be a network element in a hardware device, may be a software function running on dedicated hardware, or may be a virtualized function instantiated on a platform (for example, a cloud platform). Optionally, the user plane function may be implemented by one device, may be jointly implemented by a plurality of devices, or may be a functional module in a device.

The method includes: The user plane function receives a shared key from a session management function; and the user plane function derives, based on the shared key, a key for protecting data of an MPQUIC connection between the terminal apparatus and the user plane function, where the MPQUIC connection is associated with the MA PDU session, and the data of the MPQUIC connection is transmitted on a plurality of paths between the terminal apparatus and the user plane function.

In a possible implementation, the user plane function further receives an identifier of the shared key from the session management function, where the identifier of the shared key is determined by the session management function or a first function based on an identifier of the MA PDU session; and the user plane function stores the identifier of the shared key and the shared key in a correspondence. In a possible implementation, the identifier of the shared key is the identifier of an MA PDU session. For example, the first function is an access management function, a security anchor function, or an authentication server function.

For technical effects that can be achieved in the fourth aspect, refer to descriptions of beneficial effects in the third aspect. Details are not described herein again.

According to a fifth aspect, this application provides a communication method. The communication method is applicable to a process of establishing an MA PDU session for a terminal apparatus. The communication method may be performed by the terminal apparatus. The terminal apparatus may be a terminal device or a module (for example, a chip) in the terminal device.

The method includes: The terminal apparatus receives a first indication from a session management function, where the first indication indicates to establish an MPQUIC connection to a user plane function in a shared key manner, and the MPQUIC connection is associated with the MA PDU session; the terminal apparatus derives a shared key based on the first indication; and further, the terminal apparatus derives, based on the shared key, a key for protecting data of the MPQUIC connection, where the data of the MPQUIC connection is transmitted on a plurality of paths between the terminal apparatus and the user plane function.

In a possible implementation, the terminal apparatus further sends capability information of the terminal apparatus to the session management function, where the capability information of the terminal apparatus indicates that the terminal apparatus supports establishment of the MPQUIC connection.

In a possible implementation, that the terminal apparatus derives the shared key based on the first indication may be specifically: The terminal apparatus derives the shared key based on the first indication and one or more of the following parameters: an identifier of the terminal apparatus, an identifier of the MA PDU session, and an upper-level key. For example, the upper-level key includes one or more of the following: a security anchor function key, a radio access node (radio access node, RAN) key, an access management function key, and an authentication server function key.

In the foregoing technical solution, a manner of deriving the shared key by the terminal apparatus is provided.

In a possible implementation, an identifier of the shared key is determined by the session management function based on the identifier of the MA PDU session. The terminal apparatus further receives the identifier of the shared key from the session management function.

In a possible implementation, the identifier of the shared key is determined by the terminal apparatus based on the identifier of the MA PDU session. In other words, the terminal apparatus further determines the identifier of the shared key based on the identifier of the MA PDU session.

In a possible implementation, the terminal apparatus further stores the identifier of the shared key and the shared key in a correspondence.

In a possible implementation, the identifier of the shared key is the identifier of an MA PDU session.

For technical effects that can be achieved in the fifth aspect, refer to descriptions of beneficial effects in the third aspect. Details are not described herein again.

According to a sixth aspect, this application provides a communication method. The communication method is applicable to a process of establishing an MA PDU session for a terminal apparatus. The communication method is performed by a first function. The first function may be a network element in a hardware device, may be a software function running on dedicated hardware, or may be a virtualized function instantiated on a platform (for example, a cloud platform). Optionally, the first function may be implemented by one device, may be jointly implemented by a plurality of devices, or may be a functional module in a device.

The method includes: The first function receives a second indication from a session management function; the first function derives a shared key based on the second indication; and the first function sends the shared key to the session management function, where the shared key is for deriving a key for protecting data of an MPQUIC connection between the terminal apparatus and the user plane function, the MPQUIC connection is associated with the MA PDU session, and the data of the MPQUIC connection is transmitted on a plurality of paths between the terminal apparatus and the user plane function.

In a possible implementation, an identifier of the shared key is determined by the session management function based on the identifier of the MA PDU session. The first function further receives the identifier of the shared key from the session management function. In a possible implementation, the identifier of the shared key is determined by the first function based on the identifier of the MA PDU session. In other words, the first function further receives the identifier of the MA PDU session from the session management function, and determines the identifier of the shared key based on the identifier of the MA PDU session.

In a possible implementation, that the first function derives the shared key based on the second indication may be specifically: The first function derives the shared key based on the second indication and one or more of the following parameters: an identifier of the terminal apparatus, an identifier of the MA PDU session, and an upper-level key. For example, when the first function is an access management function, the upper-level key may include one or more of the following: a radio access node key and an access management function key; when the first function is a security anchor function, the upper-level key may be a security anchor function key; when the first function is an authentication server function, the upper-level key may be an authentication server function key.

In the foregoing technical solution, a manner of deriving the shared key by the first function is provided.

For technical effects that can be achieved in the sixth aspect, refer to descriptions of beneficial effects in the third aspect. Details are not described herein again.

According to a seventh aspect, this application provides a communication method. The communication method is performed by a session management function. The session management function may be a network element in a hardware device, may be a software function running on dedicated hardware, or may be a virtualized function instantiated on a platform (for example, a cloud platform). Optionally, the session management function may be implemented by one device, may be jointly implemented by a plurality of devices, or may be a functional module in a device.

The method includes: The session management function receives a session establishment request from a terminal apparatus, where the session establishment request is for requesting to establish an MA PDU session of the terminal apparatus; and the session management function sends a certificate application indication to a user plane function based on the session establishment request, where the certificate application indication indicates to request a certificate of the user plane function from a certificate authority, and the certificate of the user plane function is used by the terminal apparatus to perform authentication on the user plane function in a process of establishing an MPQUIC connection between the terminal apparatus and the user plane function, where the MPQUIC connection is associated with the MA PDU session, and data of the MPQUIC connection is transmitted on a plurality of paths between the terminal apparatus and the user plane function.

In the foregoing technical solution, the session management function sends the certificate application indication to the user plane function, where the certificate application indication indicates to request the certificate of the user plane function from the certificate authority, and the certificate of the user plane function is used by the terminal apparatus to perform authentication on the user plane function in the process of establishing the MPQUIC connection between the terminal apparatus and the user plane function. In this way, security is implemented in the process of establishing the MPQUIC connection between the terminal apparatus and the user plane function.

In a possible implementation, after sending the certificate application indication to the user plane function, the session management function further receives an acknowledgment indication from the user plane function, where the acknowledgment indication indicates that the user plane function successfully requests the certificate of the user plane function. For example, the session management function determines, based on the acknowledgment indication, that the user plane function successfully requests the certificate of the user plane function.

In the foregoing technical solution, after receiving the acknowledgment indication, the session management function continues to perform a subsequent MA PDU session establishment procedure, so that the terminal apparatus can initiate, after the MA PDU session establishment procedure ends, a procedure of establishing the MPQUIC connection to the user plane function. In this way, a problem that the terminal apparatus fails to establish the MPQUIC connection to the user plane function because the terminal apparatus initiates the procedure of establishing the MPQUIC connection to the user plane function when the user plane function has not requested the certificate of the user plane function is avoided.

In a possible implementation, the session management function further sends a first certificate request to the certificate authority, where the first certificate request includes a public key of the terminal apparatus, and the public key of the terminal apparatus is for generating a certificate of the terminal apparatus. For example, the public key of the terminal apparatus is used by the certificate authority to generate the certificate of the terminal apparatus. The session management function receives the certificate of the terminal apparatus from the certificate authority, and sends the certificate of the terminal apparatus to the terminal apparatus, where the certificate of the terminal apparatus is used to perform authentication on the terminal apparatus in a process of establishing the MPQUIC connection. The foregoing technical solution provides an implementation of a mutual authentication manner.

In a possible implementation, before sending the first certificate request to the certificate authority, the session management function further sends a mutual authentication indication to the terminal apparatus, where the mutual authentication indication indicates that an authentication manner in the process of establishing the MPQUIC connection is a mutual authentication manner. Then, the session management function receives the public key of the terminal apparatus. For example, the mutual authentication indication may be carried in a radio resource control reconfiguration message.

In the foregoing technical solution, the session management function sends the mutual authentication indication to the terminal apparatus, to receive the public key of the terminal apparatus, and request the certificate of the terminal apparatus from the certificate authority based on the public key of the terminal apparatus. This avoids unnecessary data transmission when the terminal apparatus further sends the public key of the terminal apparatus to the session management function in the one-way authentication manner.

In a possible implementation, the session establishment request includes the public key of the terminal apparatus. For example, the certificate of the terminal apparatus may be carried in a radio resource control reconfiguration message.

In the foregoing technical solution, the terminal apparatus may use the mutual authentication indication by default, so that the session establishment request carries the public key of the terminal apparatus, to prevent the session management function from indicating the terminal apparatus to generate the public key of the terminal apparatus, thereby helping improve efficiency of establishing the MPQUIC connection.

In a possible implementation, the first certificate request further includes an identifier of the MA PDU session, and the identifier of the MA PDU session is for determining an identifier of the certificate of the terminal apparatus. For example, the identifier of the MA PDU session is used by the certificate authority to determine the identifier of the certificate of the terminal apparatus.

In a possible implementation, the session management function further sends the identifier of the MA PDU session to the user plane function, where the identifier of the MA PDU session is for determining an identifier of the certificate of the user plane function. For example, the identifier of the MA PDU session is used by the certificate authority to determine the identifier of the certificate of the user plane function.

In the foregoing technical solution, the identifier of the MA PDU session is for determining the identifier of the certificate, so that the certificate is specific to each MA PDU session, thereby helping improve security of the MPQUIC connection.

In a possible implementation, before sending the certificate application indication to the user plane function, the session management function further determines to enable a function corresponding to the MPQUIC connection. For example, that the session management function determines to enable the function corresponding to the MPQUIC connection may be specifically: The session management function receives capability information from the terminal apparatus, and determines, based on the capability information of the terminal apparatus, that the terminal apparatus supports establishment of the MPQUIC connection; and/or the session management function determines that the function corresponding to the MPQUIC connection is supported.

In the foregoing technical solution, the session management function may first determine to enable the function corresponding to the MPQUIC connection, and then send the certificate application indication to the user plane function, to provide a determining condition for the session management function to determine that the MPQUIC connection can be established between the terminal apparatus and the user plane function.

According to an eighth aspect, this application provides a communication method. The communication method is performed by a terminal apparatus, and the terminal apparatus may be a terminal device or a module (for example, a chip) in the terminal device.

The method includes: The terminal apparatus sends a session establishment request to a session management function, where the session establishment request is for requesting to establish an MA PDU session of the terminal apparatus; and the terminal apparatus may establish an MPQUIC connection to a user plane function after establishment of the MA PDU session is completed. Further, the terminal apparatus receives a certificate of the user plane function from the user plane function in a process of establishing the MPQUIC connection between the terminal apparatus and the user plane function, and performs authentication on the user plane function based on the certificate of the user plane function, where the MPQUIC connection is associated with the MA PDU session, and data of the MPQUIC connection is transmitted on a plurality of paths between the terminal apparatus and the user plane function.

In a possible implementation, the terminal apparatus further receives a certificate of the terminal apparatus from the session management function; and in the process of establishing the MPQUIC connection between the terminal apparatus and the user plane function, the terminal apparatus sends the certificate of the terminal apparatus to the user plane function, where the certificate of the terminal apparatus is used by the user plane function to perform authentication on the terminal apparatus.

The terminal apparatus may receive the certificate of the terminal apparatus from the session management function in three manners:
Manner 1: The terminal apparatus uses a mutual authentication manner by default, and the terminal apparatus first generates a public key of the terminal apparatus, so that the terminal apparatus includes the public key of the terminal apparatus in the session establishment request when sending the session establishment request, where the public key of the terminal apparatus is for requesting the certificate of the terminal apparatus from a certificate authority. Correspondingly, the session management function may obtain the public key of the terminal apparatus from the session establishment request, request the certificate of the terminal apparatus from the certificate authority based on the public key of the terminal apparatus, and send the certificate of the terminal apparatus to the terminal apparatus. For example, a PDU session establishment procedure further includes an access network-specific resource setup (AN-specific resource setup) procedure. In the AN-specific resource setup procedure, the terminal apparatus receives the certificate of the terminal apparatus. Optionally, the terminal apparatus further receives indication information indicating that establishment of the MA PDU session is completed. For example, the terminal apparatus receives a radio resource control reconfiguration message, where the radio resource control reconfiguration message includes the certificate of the terminal apparatus. Optionally, the radio resource control reconfiguration message may further carry the indication information.
Manner 2: The terminal apparatus does not include a public key of the terminal apparatus in the session establishment request, but generates the public key of the terminal apparatus after receiving a mutual authentication indication from the session management function, that is, the mutual authentication indication indicates that an authentication manner in the process of establishing the MPQUIC connection is a mutual authentication manner. For example, a PDU session establishment procedure further includes an AN-specific resource setup procedure. In the AN-specific resource setup procedure, the terminal apparatus receives the mutual authentication indication. Optionally, the terminal apparatus further receives indication information indicating that establishment of the MA PDU session is completed. For example, the terminal apparatus receives a radio resource control reconfiguration message, where the radio resource control reconfiguration message includes the mutual authentication indication. Optionally, the radio resource control reconfiguration message may further carry the indication information. Further, the terminal apparatus sends the public key of the terminal apparatus to the session management function, where the public key of the terminal apparatus is for requesting the certificate of the terminal apparatus from a certificate authority. Correspondingly, the session management function may request the certificate of the terminal apparatus from the certificate authority based on the certificate of the terminal apparatus, and send the certificate of the terminal apparatus to the terminal apparatus.
Manner 3: The terminal apparatus does not include a public key of the terminal apparatus in the session establishment request, but generates the public key of the terminal apparatus after receiving a mutual authentication indication from the session management function, that is, the mutual authentication indication indicates that an authentication manner in the process of establishing the MPQUIC connection is a mutual authentication manner. For example, a PDU session establishment procedure further includes an authentication manner notification procedure. In the procedure, the terminal apparatus receives the mutual authentication indication. For example, the terminal apparatus receives a radio resource control reconfiguration message, where the radio resource control reconfiguration message includes the mutual authentication indication. Further, the terminal apparatus sends the public key of the terminal apparatus to the session management function, where the public key of the terminal apparatus is for requesting the certificate of the terminal apparatus from a certificate authority. Correspondingly, the session management function may request the certificate of the terminal apparatus from the certificate authority based on the certificate of the terminal apparatus, and send the certificate of the terminal apparatus to the terminal apparatus. For example, the PDU session establishment procedure further includes an AN-specific resource setup procedure. In the AN-specific resource setup procedure, the terminal apparatus receives the certificate of the terminal apparatus. Optionally, the terminal apparatus further receives indication information indicating that establishment of the MA PDU session is completed. For example, the terminal apparatus receives a radio resource control reconfiguration message, where the radio resource control reconfiguration message includes the certificate of the terminal apparatus. Optionally, the radio resource control reconfiguration message may further carry the indication information.

For example, the indication information indicating that establishment of the MA PDU session is completed is PDU session establishment accept.

In a possible implementation, the terminal apparatus further generates a private key of the terminal apparatus, and the private key of the terminal apparatus is used to sign a transmitted message in the process of establishing the MPQUIC connection.

In a possible implementation, the terminal apparatus further receives an identifier of the certificate of the user plane function from the user plane function, where the identifier of the certificate of the user plane function is determined based on an identifier of the MA PDU session.

In a possible implementation, the terminal apparatus further sends capability information of the terminal apparatus to the session management function, where the capability information of the terminal apparatus indicates that the terminal apparatus supports establishment of the MPQUIC connection.

For technical effects that can be achieved in the eighth aspect, refer to descriptions of beneficial effects in the seventh aspect. Details are not described herein again.

According to a ninth aspect, this application provides a communication method. The communication method is performed by a user plane function. The user plane function may be a network element in a hardware device, may be a software function running on dedicated hardware, or may be a virtualized function instantiated on a platform (for example, a cloud platform). Optionally, the user plane function may be implemented by one device, may be jointly implemented by a plurality of devices, or may be a functional module in a device.

The method includes: The user plane function receives a certificate application indication from a session management function in a process of establishing an MA PDU session of a terminal apparatus, and requests a certificate of the user plane function from a certificate authority based on the certificate application indication. The user plane function sends the certificate of the user plane function to the terminal apparatus in a process of establishing an MPQUIC connection between the terminal apparatus and the user plane function, where the certificate of the user plane function is used by the terminal apparatus to perform authentication on the user plane function. In other words, the certificate of the user plane function is used by the terminal apparatus to perform authentication on the user plane function in the process of establishing the MPQUIC connection between the terminal apparatus and the user plane function. The MPQUIC connection is associated with the MA PDU session, and data of the MPQUIC connection is transmitted on a plurality of paths between the terminal apparatus and the user plane function.

In a possible implementation, that the user plane function requests the certificate of the user plane function from the certificate authority may be specifically: The user plane function sends a second certificate request to the certificate authority, where the second certificate request is for requesting the certificate of the user plane function from the certificate authority; and the user plane function receives the certificate of the user plane function from the certificate authority.

In a possible implementation, in the process of establishing the MPQUIC connection between the terminal apparatus and the user plane function, the user plane function further receives a certificate of the terminal apparatus; and performs authentication on the terminal apparatus based on the certificate of the terminal apparatus.

In a possible implementation, the second certificate request includes a public key of the user plane function, and the public key of the user plane function is for determining the certificate of the user plane function. Further, before sending the second certificate request, the user plane function further generates the public key of the user plane function.

In a possible implementation, the user plane function further generates a private key of the user plane function, and the private key of the user plane function is used to sign a transmitted message in the process of establishing the MPQUIC connection.

In a possible implementation, the second certificate request further includes an identifier of the MA PDU session, and the identifier of the MA PDU session is for determining an identifier of the certificate of a user plane function. Further, before sending the second certificate request, the user plane function further receives the identifier of the MA PDU session from the session management function.

In a possible implementation, after successfully obtaining the certificate of the user plane function from the certificate authority, the user plane function sends an acknowledgment indication to the session management function, where the acknowledgment indication indicates that the user plane function successfully requests the certificate of the user plane function.

For technical effects that can be achieved in the ninth aspect, refer to descriptions of beneficial effects in the seventh aspect. Details are not described herein again.

According to a tenth aspect, an embodiment of this application provides a communication apparatus.

The apparatus may be the first terminal apparatus according to any one of the first aspect or the possible implementations of the first aspect.

The apparatus may be the first user plane function according to any one of the second aspect or the possible implementations of the second aspect.

The apparatus may be the session management function according to any one of the third aspect or the possible implementations of the third aspect.

The apparatus may be the user plane function according to any one of the fourth aspect or the possible implementations of the fourth aspect.

The apparatus may be the terminal apparatus according to any one of the fifth aspect or the possible implementations of the fifth aspect.

The apparatus may be the first function according to any one of the sixth aspect or the possible implementations of the sixth aspect.

The apparatus may be the session management function according to any one of the seventh aspect or the possible implementations of the seventh aspect.

The apparatus may be the terminal apparatus according to any one of the eighth aspect or the possible implementations of the eighth aspect.

The apparatus may be the user plane function according to any one of the ninth aspect or the possible implementations of the ninth aspect.

A function of the communication apparatus may be implemented by hardware, or may be implemented by hardware executing corresponding software. The hardware or the software includes one or more modules, units, or means (means) corresponding to the function.

In a possible implementation, a structure of the apparatus includes a processing module and a transceiver module. The processing module is configured to support the apparatus in performing the method according to any implementation of any one of the first aspect to the ninth aspect. The transceiver module is configured to support communication between the apparatus and another communication device. For example, when the apparatus is the first terminal apparatus in any one of the first aspect or the possible implementations of the first aspect, the apparatus may transmit data with a first user plane function. The communication apparatus may further include a storage module. The storage module is coupled to the processing module, and stores program instructions and data that are necessary for the apparatus. In an example, the processing module may be a processor, the communication module may be a transceiver, the storage module may be a memory, and the memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, to enable the apparatus to perform the method according to any possible implementation of any one of the first aspect to the ninth aspect. Optionally, the apparatus further includes a communication interface, and the processor is coupled to the communication interface. When the apparatus is a network device or a terminal device, the communication interface may be a transceiver or an input/output interface. When the apparatus is a chip included in the network device or a chip included in the terminal device, the communication interface may be an input/output interface of the chip. Optionally, the transceiver may be a transceiver circuit, and the input/output interface may be an input/output circuit.

According to an eleventh aspect, an embodiment of this application provides a chip system, including a processor and a memory. The processor is coupled to the memory. The memory is configured to store a program or instructions. When the program or the instructions are executed by the processor, the chip system is enabled to implement the method according to any implementation of any one of the first aspect to the ninth aspect.

Optionally, the chip system further includes an interface circuit, and the interface circuit is configured to exchange a code or instructions with the processor.

Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be arranged on different chips respectively.

According to a twelfth aspect, this application provides a computer-readable storage medium. The computer-readable storage medium stores a computer program or instructions. When the computer program or the instructions are executed by a communication apparatus, the communication apparatus is enabled to perform a function according to any implementation of any one of the first aspect to the ninth aspect.

According to a thirteenth aspect, this application provides a computer program product. The computer program product includes a computer program or instructions. When the computer program or the instructions are executed by a communication apparatus, a function according to any implementation of any one of the first aspect to the ninth aspect is performed.

According to a fourteenth aspect, an embodiment of this application provides a communication system.

The communication system includes the first terminal apparatus according to any one of the first aspect or the possible implementations of the first aspect, and the first user plane function according to any one of the second aspect or the possible implementations of the second aspect. Alternatively,

The communication system includes the session management function according to any one of the third aspect or the possible implementations of the third aspect; the user plane function according to any one of the fourth aspect or the possible implementations of the fourth aspect; the terminal apparatus according to any one of the fifth aspect or the possible implementations of the fifth aspect; and the first function according to any one of the sixth aspect or the possible implementations of the sixth aspect. Alternatively,

The communication system includes the session management function according to any one of the seventh aspect or the possible implementations of the seventh aspect, the terminal apparatus according to any one of the eighth aspect or the possible implementations of the eighth aspect, and the user plane function according to any one of the ninth aspect or the possible implementations of the ninth aspect.

For technical effects that can be achieved in any one of the tenth aspect to the fourteenth aspect, refer to descriptions of beneficial effects in the first aspect to the ninth aspect. Details are not described herein again.

### BRIEF DESCRIPTION OF DRAWINGS

FIG. 1 is a diagram of an architecture of a communication system;
FIG. 2 is a first 5G system architecture supporting ATSSS;
FIG. 3 is a second 5G system architecture supporting ATSSS;
FIG. 4 is a third 5G system architecture supporting ATSSS;
FIG. 5 is a protocol stack architecture diagram of an MPQUIC connection;
FIG. 6 is a schematic flowchart of a first communication method according to this application;
FIG. 7 is a diagram of a cipher suite according to this application;
FIG. 8 is a schematic flowchart of a specific implementation of a first communication method according to this application;
FIG. 9 is a schematic flowchart of a second communication method according to this application;
FIG. 10 is a diagram of a key derivation direction according to this application;
FIG. 11 is a schematic flowchart of a first specific implementation of a second communication method according to this application;
FIG. 12 is a schematic flowchart of a second specific implementation of a second communication method according to this application;
FIG. 13 is a schematic flowchart of a third communication method according to this application;
FIG. 14a and FIG. 14b are a schematic flowchart of a first specific implementation of a third communication method according to this application;
FIG. 15a and FIG. 15b are a schematic flowchart of a second specific implementation of a third communication method according to this application;
FIG. 16 is a diagram of a structure of a first communication apparatus according to this application; and
FIG. 17 is a diagram of a structure of a second communication apparatus according to this application.

### DESCRIPTION OF EMBODIMENTS

The following first describes related technical features in embodiments of this application. It should be noted that these explanations are intended to make embodiments of this application easier to understand, but should not be considered as a limitation on the protection scope claimed in this application.

### 1. Transport layer security (transport layer security, TLS) protocol

The TLS protocol is a widely used security protocol that aims to protect privacy and data security of internet communication.

The TLS protocol is mainly for protecting communication between a client (also referred to as a web application) and a server (Server), and performing encryption and integrity protection on related communication data.

The TLS protocol mainly includes a handshake protocol and a record layer protocol. The handshake protocol is mainly for performing identity authentication and key agreement between two parties, and the record layer protocol is for providing security protection (including encryption protection and integrity protection) for application layer data based on a key negotiated by the handshake protocol.

In the handshake protocol, a client and a server interact with each other in two rounds:
First round of interaction: The two parties exchange keys.

Key exchange in the TLS protocol supports two modes:
(1) Pre-shared key exchange modes (psk key exchange modes): The client sends ClientHello to the server, where ClientHello carries two extended options: psk_key_share_modes and a pre-shared key (pre_shared_key, PSK), where psk_key_share_modes indicates that the pre-shared key exchange mode is used for key agreement, and pre_shared_key indicates a pre-shared key that the client expects to use. Similarly, the server sends ServerHello to the client, where ServerHello also carries the foregoing two extended options. In this way, the client and the server can negotiate a pre-shared key to be used in a second round of interaction between the client and the server.
(2) Key_share modes (key_share modes): The client generates an ephemeral private key and an ephemeral public key of the client, and sends ClientHello carrying the ephemeral public key of the client to the server. The server generates an ephemeral private key and an ephemeral public key of the server, and sends ServerHello carrying the ephemeral public key of the server to the client. Further, the server obtains the ephemeral public key of the client from ClientHello, and generates a shared key based on the ephemeral private key of the server and the ephemeral public key of the client; the client obtains the ephemeral public key of the server from ServerHello, and generates a shared key based on the ephemeral public key of the server and the ephemeral private key of the client. It may be understood that the shared key generated by the client is the same as the shared key generated by the server. That is, the client and the server negotiate the shared key to be used by the client and the server in a subsequent authentication stage.

Second round of interaction: The two parties perform identity authentication.

Currently, two identity authentication modes are supported:
(1) Pre-shared key authentication: corresponds to the pre-shared key exchange modes in the first round of interaction.

The client calculates a message authentication code (message authentication code, MAC) of previous interaction information by using a handshake key (handshake key) derived based on the pre-shared key, to generate a Finished message 1 (it may be understood that the Finished message 1 includes the MAC calculated by the client), and sends the Finished message 1 to the server. Correspondingly, the server checks the MAC in the Finished message 1 based on a handshake key derived from the pre-shared key of the server. If the check succeeds, the server determines that the client and the server have the same pre-shared key.

Similarly, the server calculates a MAC of previous interaction information by using a handshake key derived based on the pre-shared key, to generate a Finished message 2 (it may be understood that the Finished message 2 includes the MAC calculated by the server), and sends the Finished message 2 to the client. Correspondingly, the client checks the MAC in the Finished message 2 based on a handshake key derived from the pre-shared key of the client. If the check succeeds, the client determines that the server and the client have the same pre-shared key.

(2) Certificate authentication: corresponds to the key_share modes in the first round of interaction. A certificate (Certificate) may also be referred to as a digital certificate.

The mutual authentication may include that the server authenticates the client, and that the client authenticates the server.

In a process in which the server authenticates the client, the client uses a private key corresponding to a certificate of the client to sign the previous interaction information to obtain signature information (certificate verify), and uses a handshake key derived from the negotiated shared key to calculate the MAC of the previous interaction information to form the Finished message 1. The client sends the certificate of the client, the signature information, and the Finished message 1 to the server. Correspondingly, the server verifies an identity of the client based on the certificate and the signature information of the client, and determines, based on the MAC in the Finished message 1, that the shared key derived by the server is the same as the shared key derived by the client.

In a process in which the client authenticates the server: The server uses a private key corresponding to a certificate of the server to sign the previous interaction information to obtain signature information, and uses a handshake key derived from the shared key to calculate the MAC of the previous interaction information, to form the Finished message 2 (it may be understood that the Finished message 2 includes the MAC calculated by the server). The server sends the certificate of the server, the signature information, and the Finished message 2 to the client. Correspondingly, the client verifies an identity of the server based on the certificate and the signature information of the server, and determines, based on the MAC in the Finished message 2, that the shared key derived by the client is the same as the shared key derived by the server.

One-way authentication is specifically that the client authenticates the server, and details are not described herein.

Herein, the previous interaction information is information transmitted in a previous interaction process between the client and the server. For example, before the client calculates the MAC of the previous interaction information by using the handshake key derived from the pre-shared key, the client has sent ClientHello to the server, and the server has also sent ServerHello to the client. In this case, the previous interaction information includes ClientHello and ServerHello.

After the two rounds of interaction are completed, the two parties may derive a common protection key to protect subsequent application layer data.

### 2. Security mechanism of the quick user datagram protocol internet connection (quick user datagram protocol internet connection, QUIC) protocol

The QUIC protocol uses the handshake protocol of the TLS protocol to establish a protection key, and the protection key is for subsequently protecting a QUIC data packet. A prerequisite for running the handshake protocol of the TLS protocol is: The client and the server pre-share a key, and the client and the server authenticate each other's identity based on the pre-shared key; the client and the server preconfigure respective certificates, and the client and the server authenticate each other's identity based on the certificate of the peer end; or the server preconfigures a certificate of the server, and the client authenticates the server's identity based on the certificate of the server. In other words, it may be understood that, before the server and the client transmit data based on the QUIC protocol, a pre-shared key also needs to be negotiated, or a certificate is preconfigured for both parties or one party, to create a related security mechanism.

### 3. 5G network architecture

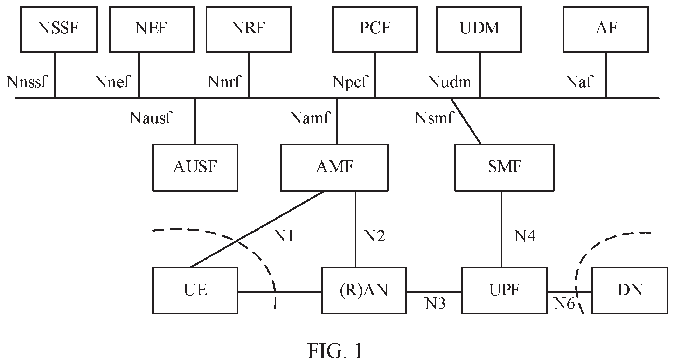

FIG. 1 is a diagram of an architecture of a communication system. The architecture of the communication system shown in FIG. 1 may include three parts: a terminal device part, a data network (data network, DN) part, and an operator network part. The following briefly describes functions of some network elements in the architecture.

The operator network may include one or more of the following network elements:
an authentication server function (authentication Server function, AUSF), a network exposure function (network exposure function, NEF), a policy control function (policy control function, PCF), a unified data management (unified data management, UDM), a unified data repository (unified data repository, UDR), a network repository function (network repository function, NRF), an access and mobility management function (access and mobility management function, AMF), a session management function (session management function, SMF), a user plane function (user plane function, UPF), a security anchor function (security anchor function, SEAF), an authentication repository and processing function (authentication repository and processing function, ARPF), an access network, and the like.

In the operator network, a part other than a radio access network part may be referred to as a core network part. In a possible implementation method, the operator network further includes an application function (application function, AF). Alternatively, the AF may not belong to the operator network, but belongs to a third party. The AF is mainly configured to notify the PCF of a latest service requirement of a third party for an application. The PCF generates a corresponding quality of service (quality of service, QoS) rule based on the requirement, to ensure that a service provided by a network meets the requirement proposed by the third party.

A terminal device (terminal device), which may also be referred to as a user equipment (user equipment, UE), is a device that has a wireless transceiver function. The terminal device may be deployed on land, where the deployment includes indoor or outdoor, or handheld or vehicle-mounted deployment; may be deployed on water (for example, on a ship); or may be deployed in air (for example, on an airplane, a balloon, and a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in autonomous driving (autonomous driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. The terminal device stores a long-term key and a related function. During mutual authentication, the terminal device verifies authenticity of the network by using the long-term key and the related function. For ease of description, the following uses an example in which the terminal device is a UE for description. In this application, the UE may be replaced with the terminal device.

The UE may establish a connection to the operator network through an interface (for example, N1) provided by the operator network, and use services such as data and/or voice provided by the operator network. The UE may further access the DN through the operator network, and use an operator service deployed on the DN and/or a service provided by a third party. The third party may be a service party except the operator network and the UE, and may provide a data service, a voice service, and/or the like for the UE. A specific representation form of the third party may be specifically determined based on an actual application scenario, and is not limited herein.

The core network part includes a user plane function and a control plane function.

The user plane function is the UPF. As an interface to the data network, the UPF performs functions such as user-plane data (such as a data packet) forwarding, QoS control, session-or flow-level charging statistics, and bandwidth control.

The control plane function is mainly for user registration and authentication, mobility management, delivery of a data packet forwarding policy and a QoS control policy to the user plane function, and the like. The control plane function may further include other network elements than the UPF, for example, the AMF, the SMF, and the SEAF.

The AMF mainly performs functions such as a registration procedure during user access and location management and access authentication/authorization during user movement. In addition, the AMF network element is further responsible for transferring a user policy between the UE and the PCF.

The SMF is mainly configured to: establish a corresponding session connection when a user initiates a service, and provide a specific service for the user, for example, deliver a data packet forwarding policy and a QoS policy to the UPF through an NG4 interface between the SMF and the UPF.

The SEAF is mainly responsible for initiating an authentication request to the AUSF, and completing authentication on the UE on a network side in an authentication and key agreement (authentication and key agreement, AKA) procedure. Optionally, the SEAF is used as a part of the AMF.

The AUSF is mainly responsible for authenticating a user, determining validity of the UE, and determining whether the UE is allowed to access a network. For example, the AUSF may be configured to: receive an authentication request sent by the SEAF; select an authentication method; complete authentication on the UE on the network side when an AKA procedure is used; request an authentication vector from the ARPF; return an authentication response to the SEAF; and generate an anchor key (anchor key).

The ARPF stores the long-term key, receives an authentication vector request from the AUSF, calculates an authentication vector by using the long-term key, and sends the authentication vector to the AUSF.

The UDM is mainly responsible for functions such as UE subscription data storage and user access authorization.

The UDR is mainly responsible for functions of storing and accessing type data such as subscription data, policy data, application data, and the like.

The PCF is mainly responsible for delivering a service-related policy to the AMF or the SMF.

The NEF is mainly configured to support capability and event exposure. For example, the NEF is mainly configured to interact with the third party, so that the third party can indirectly interact with some network elements in a 3GPP network.

The AF mainly transfers a requirement of an application side on a network side to the PCF, so that the PCF generates a corresponding policy. The AF may be a third-party function entity, or may be an application service deployed by an operator, for example, an internet protocol (internet protocol, IP) multimedia subsystem (IP multimedia subsystem, IMS) voice call service.

The NRF may be configured to: provide a network element discovery function, and provide, based on a request of another network element, network element information corresponding to a network element type. The NRF further provides network element management services, including network element registration, update, and deregistration, network element status subscription and push, and the like.

The DN is a network located outside an operator network. A plurality of DNs can access the operator network, and a plurality of services can be deployed on the DN, to provide services such as data and/or voice for a UE. For example, the DN is a private network of an intelligent factory, a sensor mounted in a workshop of the intelligent factory may be the UE, a control server of the sensor is deployed in the DN, and the control server may provide a service for the sensor. The sensor may communicate with the control server to obtain instructions of the control server, transmit collected sensor data to the control server according to the instructions, and the like. For another example, the DN is an internal office network of a company, a mobile phone or a computer of an employee in the company may be the UE, and the mobile phone or the computer of the employee can access information, a data resource, or the like on the internal office network of the company.

In FIG. 1, Nausf, Nnef, Nnrf, Npcf, Nudm, Naf, Namf, Nsmf, N1, N2, N3, N4, and N6 are interface sequence numbers. For meanings of the interface sequence numbers, refer to meanings defined in a 3GPP protocol. This is not limited herein.

It may be understood that the foregoing network elements or functions may be network elements in a hardware device, software functions running on dedicated hardware, or virtualized functions instantiated on a platform (for example, a cloud platform). Optionally, the foregoing network element or function may be implemented by one device, may be jointly implemented by a plurality of devices, or may be implemented by one functional module in one device. This is not limited in embodiments of this application. A function in this application may be further referred to as a functional entity, an entity, a network element, a functional network element, or the like. For example, the session management function may be referred to as a session management entity, a session management network element, or the like. In embodiments of this application, an access and mobility management function (which may also be referred to as an access management function), a user plane function, and a session management function are respectively described by using the AMF, the UPF, and the SMF in FIG. 1 as examples, and certainly, may be network elements that have functions of the foregoing AMF, UPF, and SMF in a future communication network such as a 6th generation (6th generation, 6G) network. This is not limited in embodiments of this application.

The access network is a subnet of the operator network, and is an implementation system between a service node in the operator network and the UE. To access the operator network, the UE first passes through the access network, and may be connected to the service node in the operator network through the access network.

The access network may include a 3GPP access network and/or a non-3GPP access network. In other words, the UE may access the core network through the 3GPP access network and/or the non-3GPP access network. The non-3GPP access network is an access network other than 3GPP, such as a wireless local area network (wireless local area network, WLAN), a wireless fidelity (wireless fidelity, Wi-Fi) network, worldwide interoperability for microwave access (worldwide interoperability for microwave access, WiMAX), and a fixed network. An access type of the UE in the 3GPP access network may be referred to as 3GPP access (3GPP access), and an access type of the UE in the non-3GPP access network may be referred to as non-3GPP access (non-3GPP access). For diagrams in which the UE accesses the core network through 3GPP access and non-3GPP access separately, refer to the following descriptions of an ATSSS function.

An access device in the 3GPP access network includes but is not limited to: a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a mobile switching center, and the like. A message transmitted between the UE and the access device in the 3GPP access network may be a radio resource control (radio resource control, RRC) message, a user plane (user plane, UP) message, or the like. For ease of description, access devices in the 3GPP access network may be collectively referred to as a radio access node (radio access node, RAN).

An access device in the non-3GPP access network may include but is not limited to: a non-3GPP interworking function (non 3GPP interworking function, N3IWF) device and a next generation packet data gateway (next generation packet data gateway, ngPDG). The N3IWF is similar to an evolved packet data gateway (evolved packet data gateway, ePDG) in long term evolution (long term evolution, LTE), and is configured to: when a UE accesses a core network through a non-3GPP access network in 5G, establish an internet protocol security (internet protocol security, IPsec) tunnel with the UE. For example, the N3IWF device may include a router and the like.

### 4. ATSSS

In an ATSSS scenario, a UE supports one or more steering functions (steering functionality), where the steering function is, for example, a multipath transmission control protocol (multipath transmission control protocol, MPTCP) function, a multipath quick user datagram protocol internet connection (multipath quick user datagram protocol internet connection, MPQUIC) function, and an ATSSS lower layer (ATSSS lower layer, ATSSS-LL) function. When the UE uses a specific steering function, specifically, the UE allows, according to an ATSSS rule provided by a network, service traffic steering, switching, and splitting across 3GPP access and non-3GPP access.

A UPF may support an MPTCP proxy function, which communicates with an MPTCP function of the UE by using the MPTCP protocol. A UPF may support an MPQUIC proxy function, which communicates with an MPQUIC function of the UE by using the MPQUIC protocol. The UPF may further support an ATSSS-LL function, which is similar to an ATSSS-LL function defined for the UE. In addition, the UPF supports a performance measurement function (performance measurement function, PMF), and the UE may use the PMF to measure corresponding access performance on a 3GPP access user plane and/or on a non-3GPP access user plane.

In the ATSSS scenario, a multiple access protocol data unit (protocol data unit, PDU) connection service is implemented. The service may use both a 3GPP access network and a non-3GPP access network to exchange a PDU between a UE and a DN. The multiple access PDU connection service is implemented by establishing an MA PDU session, that is, establishing a PDU session of a user plane resource on the two access networks. This assumes that single network slice selection assistance information (single network slice selection assistance information, S-NSSAI) for the PDU session allows both 3GPP access and non-3GPP access. In other words, the MA PDU session is a PDU session that provides a multiple access PDU connection service. One access may be used at a time, or one 3GPP access and one non-3GPP access may be used at the same time.

When the UE performs registration through 3GPP access and non-3GPP access, or when the UE performs registration through only one access, the UE may request an MA PDU session. After the MA PDU session is established, when user plane resources are available on both access networks, the UE applies the policies (such as the ATSSS rule) provided by a network and considers local conditions (such as network interface availability, a signal loss conditions, and a user preference) to determine how to allocate uplink traffic on both access networks. Similarly, a UPF anchor of the MA PDU session applies a policy (such as an N4 rule) provided by a network and feedback information (such as access network unavailability or availability) received from the UE on the user plane to determine how to allocate downlink traffic on two N3/N9 tunnels and two access networks. When a user plane resource is available on only one access network, the UE applies the ATSSS rule and considers triggering a local condition for establishment or activation of the user plane resource on the other access network.

In the same MA PDU session of the UE, an MPTCP function may be used to steer TCP traffic, the MPQUIC function may be used to steer user datagram protocol (user datagram protocol, UDP) traffic, and the ATSSS-LL function may be used to steer all other traffic. For a same data packet flow, only one steering function needs to be used. All steering functions in the UE need to use a same ATSSS rule set to make ATSSS decisions (to be specific, to decide how to steer, switch, and split traffic). Similarly, all ATSSS decisions in the UPF need to be made by applying a same set of N4 rules that support ATSSS. When an MA PDU session is established, ATSSS rules and N4 rules supporting ATSSS are provided to the UE and the UPF, respectively. If the UE supports a plurality of steering functions, such as MPTCP and ATSSS-LL functions, or MPTCP, MPQUIC, and ATSSS-LL functions, the UE needs to use provided ATSSS rules to determine a steering function to be applied to a particular data packet flow.

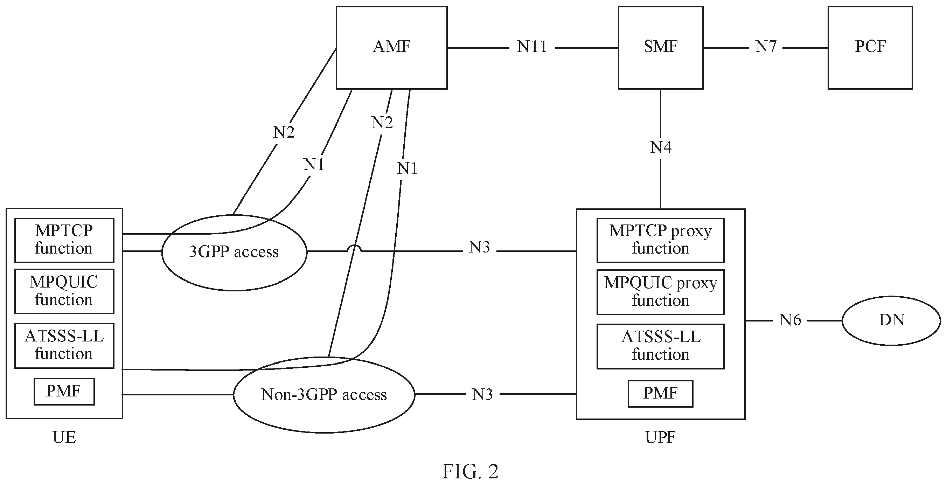

With reference to FIG. 1, FIG. 2 shows a 5G system architecture supporting ATSSS when a UE registers with a public land mobile network (public land mobile network, PLMN) through 3GPP access and non-3GPP access in a case of non-roaming and roaming with a local breakout architecture (non-roaming and roaming with local breakout architecture).

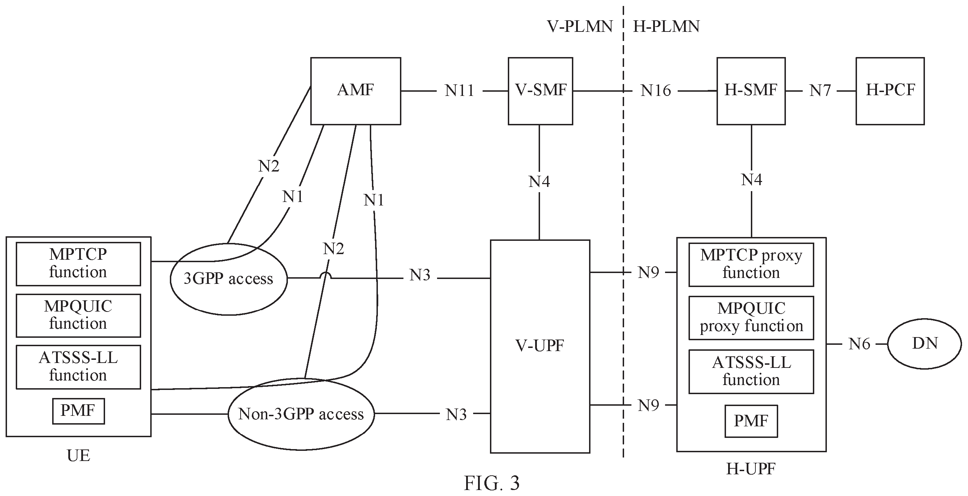

With reference to FIG. 1, FIG. 3 shows a 5G system architecture supporting ATSSS when a UE registers with a same visited public land mobile network (visit public land mobile network, V-PLMN) through 3GPP access and non-3GPP access in a roaming case. In this case, the MPTCP proxy function, the MPQUIC proxy function, the ATSSS-LL proxy function, and the PMF are located in a home UPF (home UPF, H-UPF).

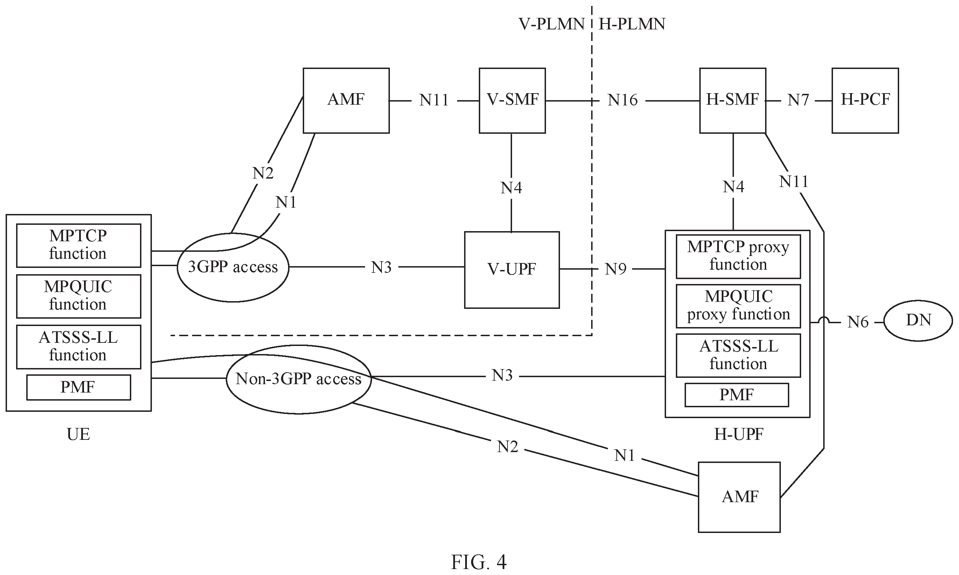

With reference to FIG. 1, FIG. 4 shows a 5G system architecture supporting ATSSS in a roaming case when a UE registers with a V-PLMN through 3GPP access and registers with a home public land mobile network (home public land mobile network, H-PLMN) through non-3GPP access (that is, the UE registers with different PLMNs). In this case, the MPTCP proxy function, the MPQUIC proxy function, the ATSSS-LL proxy function, and the PMF are located in an H-UPF.

For descriptions of the network elements, refer to the descriptions in the embodiment related to FIG. 1.

### 5. Protocol stack of the MPQUIC connection

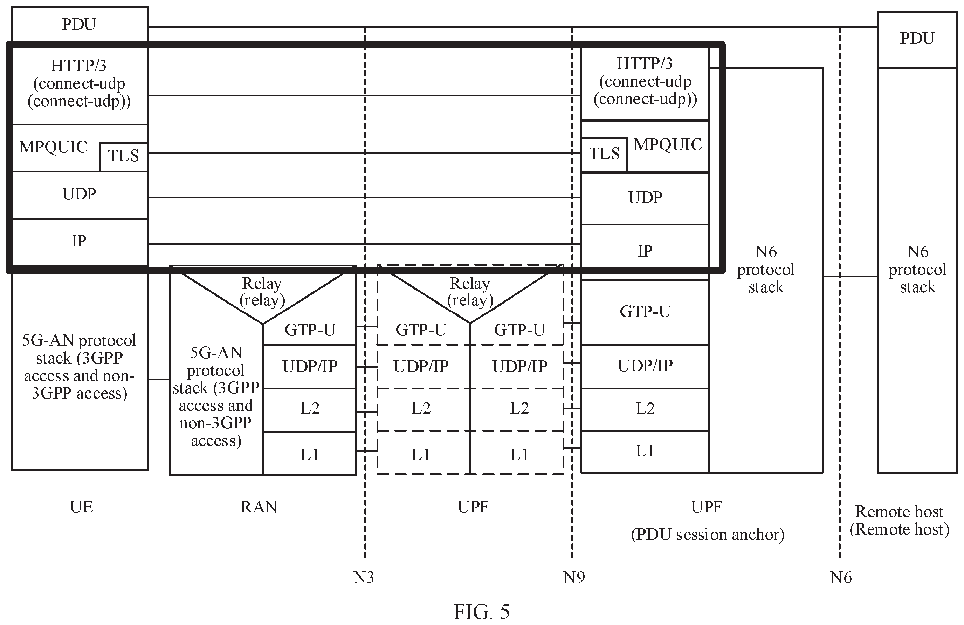

FIG. 5 is an example of an architectural diagram of a protocol stack of an MPQUIC connection. Compared with a conventional 5G user plane protocol stack, a part in a bold box is a newly added protocol stack. For example, a UE sends data (namely, a PDU packet) to a UPF. When the PDU packet passes through an MPQUIC layer, the MPQUIC layer performs TLS encryption on the PDU packet, to obtain a PDU packet encrypted by using TLS. Subsequently, the PDU packet encrypted by using TLS is encapsulated into an IP packet sequentially through a UDP layer and an internet protocol (internet protocol, IP) layer. The UE transmits the IP packet to a RAN through air interface security protection. The RAN performs decryption and layer-by-layer decapsulation based on air interface security protection to obtain a GTP-U packet at a general packet radio service (general packet radio service, GPRS) tunneling protocol for user plane (GPRS tunnelling protocol for user plane, GTP-U) layer. Then, the GTP-U layer encrypts the GTP-U packet through IPsec security protection, and transmits the GTP-U packet that is encrypted through IPsec security protection to a UPF through an IPsec tunnel. The UPF deciphers the GTP-U packet that is encrypted through IPsec security protection, to obtain the GTP-U packet, and then decrypts the GTP-U packet at an MPQUIC layer based on the TLS protocol to obtain a correct PDU packet. In this way, it can be learned that after the UE establishes an MPQUIC connection to the UPF, two layers of security protection are performed. One layer of security protection is security protection based on an TLS technology at the MPQUIC layer (or referred to as end-to-end security protection between the UE and the UPF), and the other layer of security protection is 3GPP security protection. The 3GPP security protection specifically includes air interface security protection and IPsec security protection.

Based on the foregoing explanations of related technical features in embodiments of this application, the following describes embodiments of this application in detail.

A UE and a UPF may establish an MA PDU session. The session supports a plurality of access paths (for example, a path accessed through 3GPP and a path accessed through non-3GPP), and data may be transmitted on different access paths. An ATSSS function further supports an MPQUIC function. In other words, for a UE that supports the ATSSS function, the UE may support establishment, to the UPF, of an MPQUIC connection associated with the MA PDU session. In a process in which the UE and the UPF establish the MPQUIC connection, how to implement a security solution is a technical problem that urgently needs to be resolved currently.

Therefore, this application provides three communication methods, to implement a security solution in a process of establishing an MPQUIC connection between a UE and a UPF. The MPQUIC connection between the UE and the UPF is referred to as an MPQUIC connection for short below.

In a first communication method, a UE and a UPF are separately preconfigured with a same key (which may be referred to as a preconfigured key), and the UE and the UPF may establish an MPQUIC connection based on the preconfigured key.

In a second communication method, an SMF indicates a first function and a UE to derive a same key (which may be referred to as a shared key), and the SMF further sends the shared key derived by the first function to a UPF. In this way, both the UE and the UPF store the shared key, and the UE and the UPF may establish an MPQUIC connection based on the shared key. The first function may be an AMF, an AUSF, or an SEAF. In this application, the first function may also be referred to as a first entity, a first network element, a first functional entity, a first functional network element, or the like.

In a third communication method, an SMF indicates a UPF to apply to a CA for a certificate of the UPF, the UPF sends the certificate of the UPF to a UE, and the UE may perform authentication on the UPF based on the certificate of the UPF. In one-way authentication, after determining that authentication on the UPF succeeds, the UE may establish an MPQUIC connection to the UPF based on a shared key negotiated by the UE and the UPF. In mutual authentication, the SMF further applies to the CA for a certificate of the UE, and sends the certificate of the UE to the UE. The UE then sends the certificate of the UE to the UPF, and the UPF performs authentication on the UE based on the certificate of the UE. After determining that authentication on the UPF succeeds, the UE establishes an MPQUIC connection to the UPF based on a shared key negotiated by the UE and the UPF. After determining that authentication on the UE succeeds, the UPF establishes the MPQUIC connection to the UE based on the shared key negotiated by the UE and the UPF.

The following separately describes the first communication method to the third communication method in sequence.

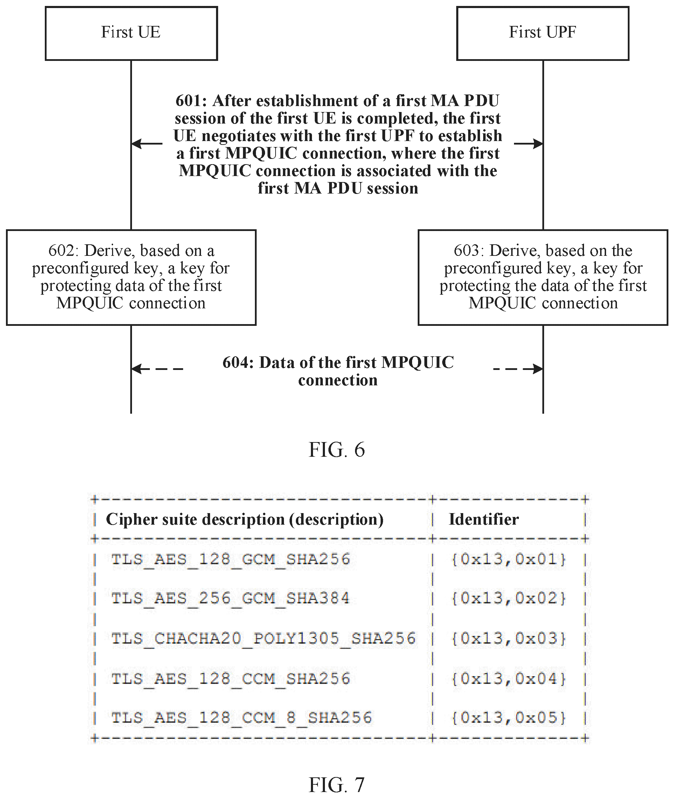

FIG. 6 is an example of a schematic flowchart of the first communication method.

Step 601: After establishment of a first MA PDU session of a first UE is completed, the first UE negotiates with a first UPF to establish a first MPQUIC connection, where the first MPQUIC connection is associated with the first MA PDU session.

For a procedure of establishing the first MA PDU session of the first UE, refer to descriptions in the 3GPP TS 23.502 protocol.

Both the first UE and the first UPF store a same preconfigured key. Optionally, the first UE and the first UPF further store an identifier of the preconfigured key. In a possible implementation, that the first UE negotiates with the first UPF to establish the first MPQUIC connection may be specifically: The first UE sends the identifier of the preconfigured key to the first UPF when the first UE expects to establish the first MPQUIC connection to the first UPF by using the preconfigured key. Correspondingly, the first UPF determines the preconfigured key based on the identifier of the preconfigured key, and sends the identifier of the preconfigured key to the first UE when agreeing to use the preconfigured key to establish the first MPQUIC connection to the first UE. In this way, the two parties agree on a key (that is, the preconfigured key) that is for establishing the first MPQUIC connection.

For example, the first UE and the first UPF are respectively a client and a server in the TLS protocol. When expecting to establish the first MPQUIC connection to the first UPF by using the preconfigured key, the first UE sends a first message (for example, ClientHello) to the first UPF, where the first message carries the identifier of the preconfigured key. Correspondingly, the first UPF receives the first message from the first UE, and determines the preconfigured key based on the identifier of the preconfigured key in the first message, that is, learns that the first UE expects to use the preconfigured key to establish the first MPQUIC connection to the first UPF. Further, when agreeing to use the preconfigured key to establish the first MPQUIC connection to the first UE, the first UPF sends a second message (for example, ServerHello) to the first UE, where the second message carries the identifier of the preconfigured key. It may be considered that the second message is sent by the first UPF in response to the first message. In this way, the first UE and the first UPF negotiate to use the preconfigured key to establish the first MPQUIC connection. This manner helps better be compatible with a manner of connection establishment between the client and the server in the existing TLS protocol.

That the first MPQUIC connection is associated with the first MA PDU session may be specifically: The MPQUIC connection is a connection in the first MA PDU session, the MPQUIC connection is for transmitting data in the first MA PDU session, or the like.

In addition, the first UE and the first UPF may further negotiate a cipher suite (cipher-suit) used when the first UE and the first UPF transmit data. For example, the first UE sends, to the first UPF, an identifier of one or more cipher suites supported by the first UE, and the first UPF selects, from the one or more cipher suites, one cipher suite supported by the first UPF, and sends an identifier of the selected cipher suite to the first UE. In this way, the two parties negotiate the cipher suite that is mutually supported and usable for data transmission. For example, the cipher suite includes one or more of an encryption algorithm, an encryption mode, an integrity protection algorithm, and a hash algorithm.

FIG. 7 shows an example of a plurality of cipher suites provided in this application. A cipher suite TLS_CHACHA20_POLY1305_SHA256 is used as an example for description. CHACHA20 is an encryption algorithm, POLY1305 is an integrity protection algorithm, and SHA256 is a hash algorithm. An identifier of the cipher suite is {0x13, 0x03}. TLS_AES_128_GCM_SHA256 is used as another example for description. AES_128 is an encryption algorithm, GCM is an encryption mode, and SHA256 is a hash algorithm. An identifier of the cipher suite is {0x13, 0x01}. For example, if cipher suites supported by the first UE are TLS_CHACHA20_POLY1305_SHA256 and TLS_AES_128_GCM_SHA256, the first UE may send the identifiers of the two cipher suites to the first UPF: {0x13, 0x03} and {0x13, 0x01}. Correspondingly, if the first UPF determines that the first UPF supports TLS_CHACHA20_POLY1305_SHA256, the first UPF sends {0x13, 0x03} to the first UE. In this way, the two parties can negotiate to use the cipher suite TLS_CHACHA20_POLY1305_SHA256 to perform data transmission.

For example, when the first UE sends an identifier of a cipher suite supported by the first UE to the first UPF, specifically, the first UE may send a first message to the first UPF, where the first message carries the identifier of the cipher suite supported by the first UE. In other words, the first message may carry not only the identifier of the preconfigured key, but also the identifier of the cipher suite supported by the first UE. When the first UPF sends, to the first UE, an identifier of a cipher suite selected by the first UPF, specifically, the first UPF may send a second message to the first UE, where the second message carries the identifier of the cipher suite selected by the first UPF. In other words, the second message may carry not only the identifier of the preconfigured key, but also the identifier of the cipher suite selected by the first UPF.

In this application, the preconfigured key may also be referred to as a pre-shared key (PSK). Optionally, the first message may further include a psk_key_share_modes extended option, to indicate the first UE to perform authentication by using the pre-shared key (that is, the preconfigured key).

Step 602: The first UE derives, based on the preconfigured key, a key (denoted as a first protection key) for protecting data of the first MPQUIC connection, where the data of the first MPQUIC connection is transmitted on a plurality of paths between the first UE and the first UPF.

The first protection key is used by the first UE to transmit the data of the first MPQUIC connection to the first UPF. Specifically, the first protection key includes an uplink protection key and a downlink protection key. The uplink protection key in the first protection key may be used by the first UE to protect uplink data sent by the first UE to the first UPF. The protection herein includes encryption protection and/or integrity protection. The downlink protection key in the first protection key may be used by the first UE to decrypt and/or check downlink data received by the first UE from the first UPF. The first protection key is, for example, a 1-round-trip time (round-trip time, RTT) key.

Alternatively, it is understood that a plurality of UPFs in a same PLMN store a same preconfigured key. In this way, the preconfigured key may be not only used by the first UE to establish the first MPQUIC connection to the first UPF, but also used by the first UE to establish a second MPQUIC connection to a second UPF. The first UPF and the second UPF are located in a same PLMN. Optionally, a plurality of UPFs located in a same PLMN further store an identifier of the preconfigured key.

In a specific example, after establishment of a second MA PDU session of the first UE is completed, the first UE negotiates with the second UPF to establish the second MPQUIC connection, where the second MPQUIC connection is associated with the second MA PDU session. The first UE derives, based on the preconfigured key, a key for protecting data of the second MPQUIC connection. Similarly, the second UPF derives, based on the preconfigured key, a key for protecting the data of the second MPQUIC connection. The data of the second MPQUIC connection is transmitted on a plurality of paths between the first UE and the second UPF.

In a specific example, in a process of establishing the second MA PDU session of the first UE, the first UE sends a PDU session establishment request to an SMF, where the PDU session establishment request includes a data network name (data network name, DNN) requested by the UE, and the data network name is different from a data network name corresponding to the first MA PDU session. The SMF selects, based on the data network name requested by the UE, a UPF (namely, the second UPF) that provides a service for the data network name, to establish the second MA PDU session for the UE.

Step 603: The first UPF derives, based on the preconfigured key, a key (denoted as a second protection key) for protecting the data of the first MPQUIC connection.

The second protection key is used by the first UPF to transmit the data of the first MPQUIC connection to the first UE. Specifically, the second protection key includes an uplink protection key and a downlink protection key. The uplink protection key in the second protection key may be used by the first UPF to decrypt and/or check uplink data received by the first UPF from the first UE. The downlink protection key in the first protection key may be used by the first UPF to protect downlink data sent by the first UPF to the first UE. The protection herein includes encryption protection and/or integrity protection. The second protection key is, for example, a 1-RTT key.

Alternatively, it is understood that a plurality of UEs in a same H-PLMN store the same preconfigured key. In this way, the preconfigured key may be not only used by the first UPF to establish the first MPQUIC connection to the first UE, but also used by the first UPF to establish a third MPQUIC connection to a second UE. The first UE and the second UE are located in a same H-PLMN. Optionally, a plurality of UEs located in a same H-PLMN further store the identifier of the preconfigured key.

In a specific example, after establishment of a third MA PDU session of the second UE is completed, the first UPF negotiates with the second UE to establish the third MPQUIC connection, where the third MPQUIC connection is associated with the third MA PDU session. The first UPF derives, based on the preconfigured key, a key for protecting data of the third MPQUIC connection. Similarly, the second UE derives, based on the preconfigured key, a key for protecting the data of the third MPQUIC connection. The data of the third MPQUIC connection is transmitted on a plurality of paths between the second UE and the first UPF.

It should be noted that the preconfigured key may be further used by a third UE to establish an MPQUIC connection to a third UPF, where the third UE and the first UE belong to a same H-PLMN, and/or the third UPF and the first UPF belong to a same PLMN. For a manner in which the third UE establishes the MPQUIC connection to the third UPF, refer to the descriptions in step 601 to step 603.

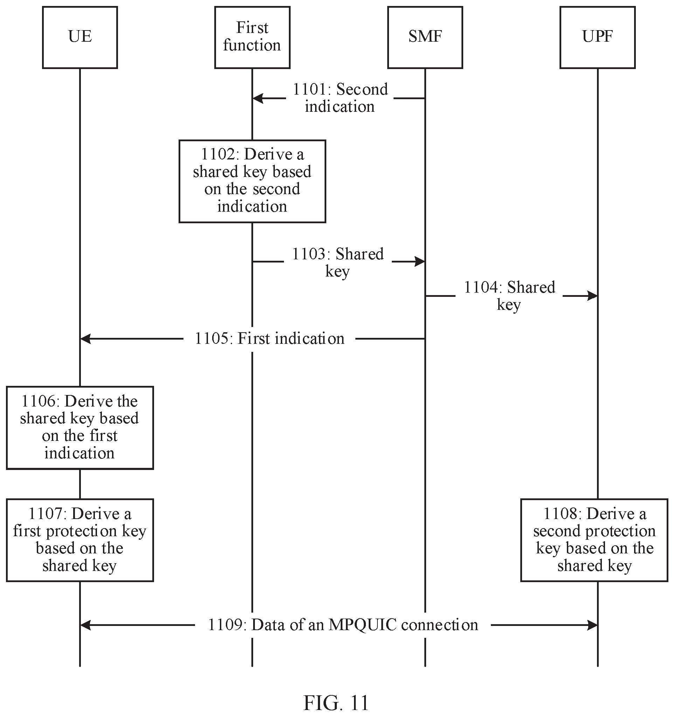

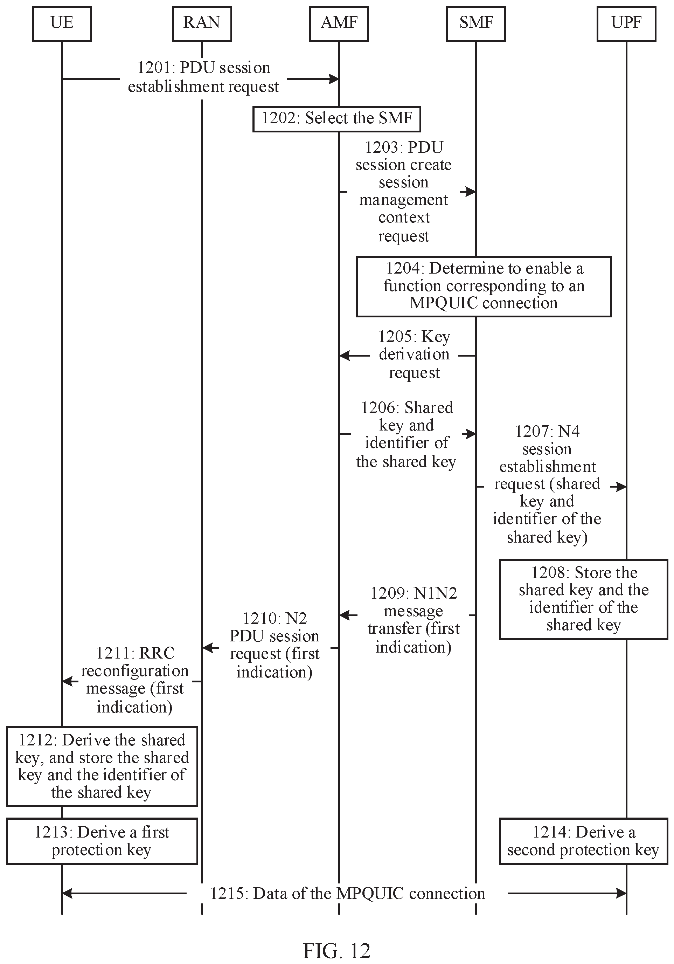

It should be further noted that a sequence of step 602 and step 603 is not limited in this application, that is, a sequence of deriving the first protection key by the UE and deriving the second protection key by the UPF is not limited. The descriptions are also applicable to the following embodiments. For example, in the following embodiment related to FIG. 11, a sequence of step 1107 and step 1108 is not limited. For another example, in the following embodiment related to FIG. 12, a sequence of step 1213 and step 1214 is not limited. In addition, there is no strict execution sequence between steps that have no time sequence dependency relationship with each other in this application.

Optionally, the method further includes the following step.

Step 604: The first UE and the first UPF transmit the data of the first MPQUIC connection.

That the first UE and the first UPF transmit the data of the first MPQUIC connection may specifically include: The first UE protects, by using the uplink key in the first protection key, the uplink data sent to the first UPF, and correspondingly, the first UPF decrypts and/or checks the uplink data from the first UE by using the uplink key in the second protection key; and/or the first UPF protects, by using the downlink key in the second protection key, the downlink data sent to the first UE, and correspondingly, the first UE decrypts and/or checks the downlink data from the first UPF by using the downlink key in the first protection key.

Further, when the first UE and the first UPF negotiate the cipher suite, the first UE and the first UPF can further transmit the data of the first MPQUIC connection by using the negotiated cipher suite. To be specific, the first UE can protect, by using the uplink key in the first protection key and the negotiated cipher suite, the uplink data sent to the first UPF, and the first UPF decrypts and/or checks the uplink data from the first UE by using the uplink key in the second protection key and the negotiated cipher suite; and/or the first UPF protects, by using the downlink key in the second protection key and the negotiated cipher suite, the downlink data sent to the first UE, and the first UE decrypts and/or checks the downlink data from the first UPF by using the downlink key in the first protection key and the negotiated cipher suite.

For example, the cipher suite is TLS_CHACHA20_POLY1305_SHA256. When the first UE sends the uplink data to the first UPF, the first UE encrypts the uplink data based on CHACHA20 and the uplink key in the first protection key, hashes the uplink data based on POLY1305, SHA256, and the uplink key in the first protection key to obtain a MAC, and sends the encrypted uplink data and the MAC to the first UPF. The first UPF decrypts the received uplink data based on CHACHA20 and the uplink key in the second protection key, and performs integrity check on the received uplink data based on SHA256, POLY1305, and the uplink key in the second protection key.

Further, the first MPQUIC connection may include a plurality of transmission paths. In other words, the first MPQUIC connection may be for transmitting data between the first UE and the first UPF by using the plurality of paths. For example, the first UE may use a plurality of transmission paths to transmit data, or may select one transmission path from a plurality of transmission paths to transmit data.

For example, the first MPQUIC connection includes a transmission path 1 and a transmission path 2. Further, the transmission path 1 is a transmission path corresponding to 3GPP access, and the transmission path 2 is a transmission path corresponding to non-3GPP access. Devices related to the transmission path 1 may include the first UE, an access device (such as a gNB or an eNB) of a 3GPP access network, and the first UPF. Devices related to the transmission path 2 may include the first UE, a non-3GPP access device (such as an N3IWF or an ngPDG), and the first UPF. Alternatively, the transmission path 1 is a transmission path corresponding to 3GPP access, and the transmission path 2 is also a transmission path corresponding to 3GPP access. Devices related to the transmission path 1 may include the first UE, an access device 1 of a 3GPP access network, and the first UPF. Devices related to the transmission path 2 may include the first UE, an access device 2 of the 3GPP access network, and the first UPF. Further, the first UE and the first UPF may transmit data by using both the transmission path 1 and the transmission path 2, for example, transmit data 1 by using the transmission path 1, and transmit data 2 by using the transmission path 2. Alternatively, the first UE and the first UPF may select one of the transmission path 1 and the transmission path 2 to transmit data, for example, select the transmission path 1 to transmit data 3.

It should be noted that the first MA PDU session includes M QoS flows, each QoS flow may correspond to one MPQUIC connection, where M is an integer greater than or equal to 1. In a specific implementation, after establishment of the first MA PDU session of the first UE is completed, the first UE establishes M MPQUIC connections, and each MPQUIC connection is for carrying data of UDP traffic in a corresponding QoS flow. For example, the first MA PDU session includes a QoS flow 1 to a QoS flow 3. After establishment of the first MA PDU session of the first UE is completed, the first UE establishes an MPQUIC connection 1 to an MPQUIC connection 3. The MPQUIC connection 1 to the MPQUIC connection 3 respectively correspond to the QoS flow 1 to the QoS flow 3. To be specific, the MPQUIC connection 1 may be for transmitting UDP traffic of the QoS flow 1, the MPQUIC connection 2 may be for transmitting UDP traffic of the QoS flow 2, and the MPQUIC connection 3 may be for transmitting UDP traffic of the QoS flow 3. In an optional implementation, the first UE establishes N MPQUIC connections, where N is greater than M. It may also be understood that the first MA PDU session is associated with the M MPQUIC connections (or the N MPQUIC connections), and the M MPQUIC connections (or the N MPQUIC connections) include the first MPQUIC connection and a fourth MPQUIC connection. Then, the first UE derives, based on the preconfigured key, keys for protecting data of the first MPQUIC connection and the fourth MPQUIC connection separately, and the first UPF derives, based on the preconfigured key, keys for protecting the data of the first MPQUIC connection and the fourth MPQUIC connection separately. Further, different MPQUIC connections correspond to different protection keys, that is, the key for protecting the data of the first MPQUIC connection is different from the key for protecting the data of the fourth MPQUIC connection.

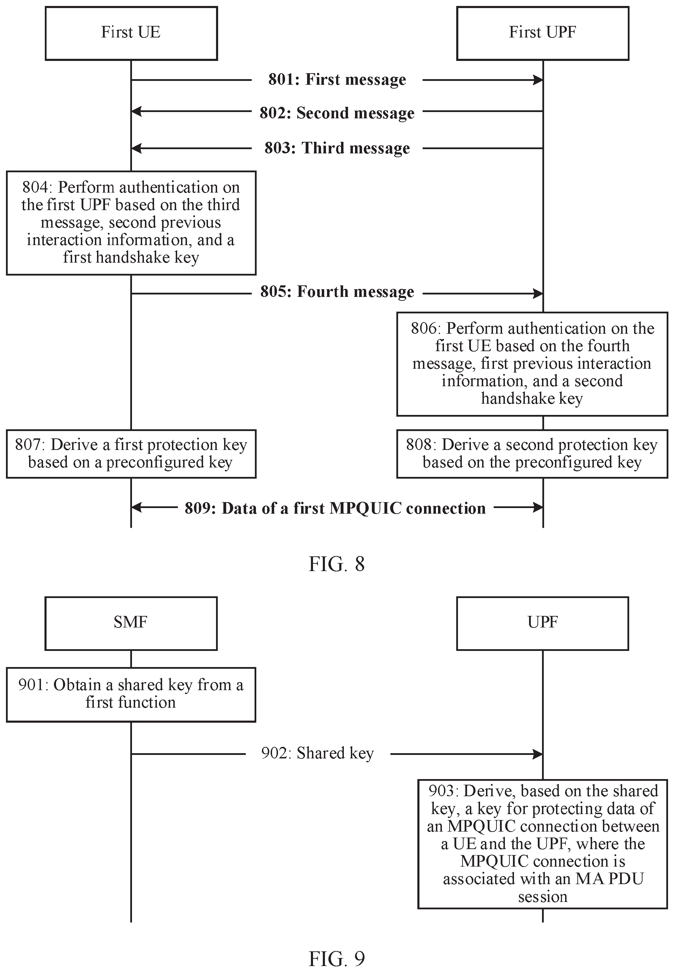

With reference to the descriptions in the embodiment related to FIG. 6, FIG. 8 shows an example of a specific implementation of the first communication method according to this application. In this specific implementation, a first UE and a first UPF may negotiate in a negotiation manner in the TLS protocol, and the first UE and the first UPF are respectively a client and a server in the TLS protocol. It may be considered that the following step 801 to step 806 are a specific implementation of step 601. After the first UE negotiates with the first UPF in the negotiation manner in the TLS protocol, the first UE establishes a first MPQUIC connection to the first UPF.

Refer to the flowchart in FIG. 8.

Step 801: After establishment of a first MA PDU session of the first UE is completed, the first UE sends a first message to the first UPF, and correspondingly, the first UPF receives the first message from the first UE.

For example, the first message carries an identifier of a cipher suite supported by the first UE, an identifier of a preconfigured key, and psk_key_share_modes. The identifier of the preconfigured key is, for example, 0x00. The identifier of the cipher suite supported by the first UE is, for example, {0x13, 0x03}.

For descriptions of the first MA PDU session, the preconfigured key, and the identifier of the preconfigured key, refer to the descriptions in step 601.

Step 802: The first UPF sends a second message to the first UE, and correspondingly, the first UE receives the second message from the first UPF.

In a specific implementation, the first UPF obtains, from the first message, the identifier of the cipher suite supported by the first UE, the identifier of the preconfigured key, and psk_key_share_modes, where the identifier of the preconfigured key is 0x00, and the identifier of the cipher suite is {0x13, 0x03}. The first UPF determines, based on psk_key_share_modes and the identifier 0x00 of the preconfigured key, that the first UE expects to establish the first MPQUIC connection to the first UPF by using the preconfigured key, and that the identifier of the used preconfigured key is 0x00. The first UPF further selects, from the identifier of the cipher suite supported by the first UE, a cipher suite supported by the first UPF. For example, an identifier of the selected cipher suite is {0x13, 0x03}. The first UPF sends the second message to the first UE, where the second message includes the identifier 0x00 of the preconfigured key and the identifier {0x13, 0x03} of the cipher suite.

In step 801 and step 802, the first UE and the first UPF negotiate the preconfigured key and the cipher suite that are used when the first MPQUIC connection is established. Further, the first UE performs authentication on the first UPF (refer to step 803 and step 804), to determine whether the preconfigured key used by the first UPF is consistent with the preconfigured key used by the first UE; and the first UPF performs authentication on the first UE (refer to step 805 and step 806), to determine whether the preconfigured key used by the first UE is consistent with the preconfigured key used by the first UPF.

Step 803: The first UPF sends a third message (for example, a Finished message 2) to the first UE, and correspondingly, the first UE receives the third message from the first UPF. The third message carries a second MAC.

For example, the first UPF derives a second handshake key based on the preconfigured key, and then determines the second MAC based on second previous interaction information and the second handshake key. The second previous interaction information includes the first message and the second message. In other words, the second previous interaction information includes the identifier of the cipher suite supported by the first UE, the identifier of the preconfigured key, psk_key_share_modes, and the identifier of the cipher suite and the identifier of the preconfigured key that are selected by the first UPF.

Step 804: The first UE performs authentication on the first UPF based on the third message, the second previous interaction information, and a first handshake key. In this application, performing authentication on the first UPF may be specifically performing identity authentication on the first UPF.

In a specific implementation, the first UE derives the first handshake key based on the preconfigured key. The first UE obtains the second MAC from the third message, and then performs authentication on the second MAC based on the second previous interaction information and the first handshake key. When the authentication on the second MAC succeeds, the first UE determines that the authentication on the first UPF succeeds, that is, determines that the preconfigured key used by the first UPF is consistent with the preconfigured key used by the first UE. When the authentication on the second MAC fails, the first UE determines that the authentication on the first UPF fails, that is, determines that the preconfigured key used by the first UPF is inconsistent with the preconfigured key used by the first UE.

Step 805: After determining that the authentication on the first UPF succeeds, the first UE sends a fourth message (for example, a Finished message 1) to the first UPF, where the fourth message carries a first MAC. Correspondingly, the first UPF receives the fourth message from the first UE.

In a specific implementation, the first UE determines the first MAC based on first previous interaction information and the first handshake key. The first previous interaction information includes the second message and the first message. In other words, the first previous interaction information includes the identifier of the cipher suite supported by the first UE, the identifier of the preconfigured key, psk_key_share_modes, and the identifier of the cipher suite and the identifier of the preconfigured key that are selected by the first UPF. In addition, the first previous interaction information may further include the third message, that is, the second MAC.

Step 806: The first UPF performs authentication on the first UE based on the fourth message, the first previous interaction information, and the second handshake key. In this application, performing authentication on the first UE may be specifically performing identity authentication on the first UE.

In a specific implementation, the first UPF obtains the first MAC from the fourth message, and then performs authentication on the first MAC based on the first previous interaction information and the second handshake key. When the authentication on the first MAC succeeds, the first UPF determines that the authentication on the first UE succeeds, that is, determines that the preconfigured key used by the first UE is consistent with the preconfigured key used by the first UPF. When the authentication on the first MAC fails, the first UPF determines that the authentication on the first UE fails, that is, determines that the preconfigured key used by the first UE is inconsistent with the preconfigured key used by the first UPF.

Step 807: The first UE derives a first protection key based on the preconfigured key.

For a specific implementation, refer to the descriptions in step 602.

Step 808: The first UPF derives a second protection key based on the preconfigured key.

For a specific implementation, refer to the descriptions in step 603.

Step 809: The first UE and the first UPF transmit data of the first MPQUIC connection.

For a specific implementation, refer to the descriptions in step 604.

It may be understood that this embodiment of this application is described by using an example in which the first UE first authenticates the first UPF, and then the first UPF authenticates the first UE. Certainly, the first UPF may first authenticate the first UE, and then the first UE authenticates the first UPF. For example, the first UE determines the first MAC based on the first previous interaction information and the first handshake key, and sends the fourth message to the first UPF, where the fourth message carries the first MAC. The first UPF obtains the first MAC from the fourth message, and performs authentication on the first MAC based on the first previous interaction information and the second handshake key, that is, performs authentication on the first UE. Further, after determining that the authentication on the first UE succeeds, the first UPF determines the second MAC based on the second previous interaction information and the second handshake key, and sends the third message to the first UE, where the third message carries the second MAC. Correspondingly, the first UE obtains the second MAC from the third message, and performs authentication on the second MAC based on the second previous interaction information and the first handshake key, that is, performs authentication on the first UPF. After the first UE determines that the authentication on the first UPF succeeds, the first UE establishes the first MPQUIC connection to the first UPF.

It should be explained that, after step 602 (or step 807), it may be considered that the first UE establishes the first MPQUIC connection to the first UPF according to the preconfigured key; and after step 603 (or step 808), it may be considered that the first UPF establishes the first MPQUIC connection to the first UE based on the preconfigured key. Alternatively, if the first UE determines that the first UPF is authenticated in step 804, it may be considered that the first UE establishes the first MPQUIC connection to the first UPF based on the preconfigured key; and if the first UPF determines that the first UE is authenticated in step 806, it may be considered that the first UPF establishes the first MPQUIC connection to the first UE based on the preconfigured key. The descriptions may be further applied to the following second communication method and third communication method. Differences lie in: In the second communication method and the third communication method, a key used by a UE to establish an MPQUIC connection to a UPF is a shared key instead of a preconfigured key. In addition, in the second communication method and the third communication method, a first UE, a second UE, and a third UE do not need to be distinguished, and a first UPF, a second UPF, and a third UPF do not need to be distinguished.

In the first communication method, after establishment of the first MA PDU session of the first UE is completed, the first UE and the first UPF establish the first MPQUIC connection based on the preconfigured key, and security is implemented in a process in which the first UE establishes the first MPQUIC connection to the first UPF.

Further, because the first MA PDU session has been established, if user plane security protection is enabled, messages transmitted between the first UE and the first UPF in a negotiation process are already based on 3GPP security protection. Specifically, in step 601, either the identifier of the preconfigured key sent by the first UE to the first UPF or the identifier of the preconfigured key sent by the first UPF to the first UE is based on 3GPP security protection. Alternatively, in the foregoing step 801 to step 805, the first message, the second message, the third message, and the fourth message are all based on 3GPP security protection. For specific descriptions, refer to the descriptions in the embodiment related to FIG. 5. This helps improve message transmission security.

In addition, because 3GPP security protection has been established, as specified in this embodiment of this application, the first UE and the first UPF establish the MPQUIC connection by using the preconfigured key, to avoid unnecessary interaction and calculation in the process of establishing the MPQUIC connection between the first UE and the first UPF. The preconfigured key is not only used by the first UE to establish the first MPQUIC connection to the first UPF, but also used by the first UE to establish a second MPQUIC connection to a second UPF. The first UPF and the second UPF are located in a same PLMN. In other words, the preconfigured key may be used by a UE to establish MPQUIC connections to a plurality of UPFs located in a same PLMN. In this way, complexity of establishing MPQUIC connections by the UE is reduced. In addition, the preconfigured key is not only used by the first UPF to establish the first MPQUIC connection to the first UE, but also used by the first UPF to establish a third MPQUIC connection to a second UE. The first UE and the second UE are located in a same H-PLMN. In other words, the preconfigured key may be used by a UPF to establish MPQUIC connections to a plurality of UEs located in a same H-PLMN. In this way, complexity of establishing MPQUIC connections by the UPF is reduced.

FIG. 9 is an example of a schematic flowchart of the second communication method. The second communication method is specifically applicable to a process of establishing an MA PDU session for a UE. For details about the MA PDU session establishment procedure, refer to 3GPP TS 23.502.

Step 901: An SMF obtains a shared key from a first function.

The shared key is for deriving a key for protecting data of an MPQUIC connection between a UE and a UPF. A function of the shared key is similar to a function of the preconfigured key in the first communication method. Details are not described again. The MPQUIC connection is associated with an MA PDU session. The data of the MPQUIC connection is transmitted on a plurality of paths between the UE and the UPF. For the MPQUIC connection, the MA PDU session, and a relationship between the MPQUIC connection and the MA PDU session, refer to the descriptions of the first MPQUIC connection, the first MA PDU session, and the relationship between the first MPQUIC connection and the first MA PDU session in the first communication method.

The first function may be an AMF, an SEAF, or an AUSF.

In a possible implementation, that the SMF obtains the shared key from the first function may be specifically: The SMF sends a second indication to the first function. The first function receives the second indication from the SMF, derives the shared key based on the second indication, and sends the shared key to the SMF. Correspondingly, the SMF receives the shared key from the first function. The second indication indicates the first function to derive the shared key. For example, the second indication may be a key derivation indication, a UE-to-UPF end-to-end key derivation indication, an MPQUIC key derivation indication, a pre-shared key mode (PSK mode), or the like. For example, the second indication is included in a key derivation request.

In a possible implementation, the SMF sends a second indication and a first parameter to the first function. The first function determines, based on the second indication, that the shared key needs to be derived, and then derives the shared key based on the first parameter and an upper-level key. For example, the first parameter may be included in a key derivation request. The first parameter includes at least one or more of the following: an identifier of the UE, an identifier of the MA PDU session, and an identifier of the shared key.

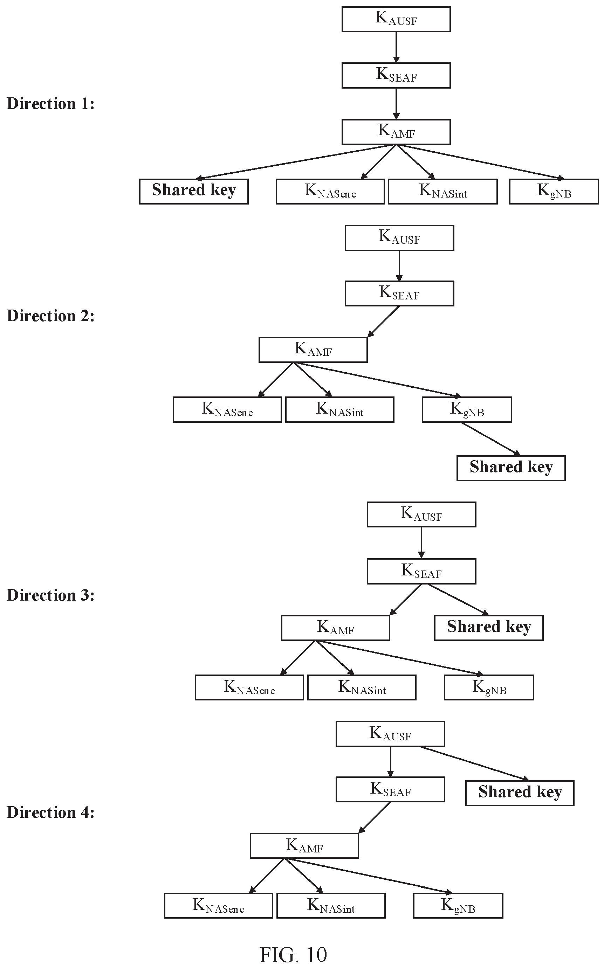

Further, when the first function is an AMF, the upper-level key includes at least one or more of the following: a RAN key and an AMF key. In other words, the AMF may derive the shared key from the AMF key. For details, refer to a direction 1 in FIG. 10. Alternatively, the AMF may derive the shared key from the RAN key. For details, refer to a direction 2 in FIG. 10. When the first function is an SEAF, the upper-level key may be an SEAF key, that is, the SEAF may derive the shared key from the SEAF key. For details, refer to a direction 3 in FIG. 10. When the first function is an AUSF, the upper-level key may be an AUSF key, that is, the AUSF may derive the shared key from the AUSF key. For details, refer to a direction 4 in FIG. 10. As shown in FIG. 10, K_{AUSF}, K_{SEAF}, K_{AMF}, K_{gNB}, K_{NASenc} and K_{NASint} are respectively the AUSF key, the SEAF key, the AMF key, a gNB key (namely, the RAN key), a non-access stratum (non-access stratum, NAS) encryption protection key, and a NAS integrity protection key, where arrows indicate derivation directions.

In this application, the SMF may not only indicate the first function to derive the shared key, but also indicate the UE to derive the shared key. For example, the SMF sends a first indication to the UE. Correspondingly, the UE receives the first indication from the SMF, and the UE derives the shared key based on the first indication. The first indication indicates the UE to establish an MPQUIC connection to the UPF in a shared key manner. Alternatively, it is understood that the first indication indicates the UE to derive the shared key. For example, the first indication may be a key derivation indication, a UE-to-UPF end-to-end key derivation indication, an MPQUIC key derivation indication, a pre-shared key mode, or the like.

In a possible implementation, that the SMF sends the first indication to the UE may be specifically: The SMF sends the first indication to the UE in an MA PDU session establishment process of the UE. In a possible example, the SMF sends an N1N2 message transfer (N1N2 message transfer) message to the AMF, where the N1N2 message transfer message includes the first indication; the AMF sends an N2 PDU session request (N2 PDU session request) to the RAN in response to the N1N2 message transfer message, where the N2 PDU session request includes the first indication; and the RAN sends an RRC reconfiguration (RRC reconfiguration) message to the UE in response to the N2 PDU session request, where the RRC reconfiguration message includes the first indication.

In a possible implementation, the UE determines, based on the first indication, that the shared key needs to be derived, and then derives the shared key based on a first parameter and an upper-level key. The first parameter includes at least one or more of the following: an identifier of the UE, an identifier of the MA PDU session, and an identifier of the shared key. Herein, because the UE stores the identifier of the UE and the identifier of the MA PDU session, when the first parameter includes a stored parameter of the UE, the SMF may not send the first parameter to the UE. The upper-level key includes at least one or more of the following: an SEAF key, a RAN key, and an AMF key, and an AUSF key. For a specific derivation manner, refer to the foregoing manner of deriving the shared key by the first function.

In a possible implementation, before the SMF obtains the shared key from the first function, and/or before the SMF sends the first indication to the UE, the SMF may determine to enable a function corresponding to the MPQUIC connection.

For example, that the SMF determines to enable the function corresponding to the MPQUIC connection may be specifically one of the following three examples:
Example 1: The UE sends capability information of the UE to the SMF, where the capability information of the UE indicates that the UE supports MPQUIC connection establishment. The SMF receives the capability information from the UE, and determines, based on the capability information of the UE, that the UE supports MPQUIC connection establishment.

The capability information of the UE may be specifically an ATSSS capability of the UE, and the ATSSS capability includes an MPQUIC capability.

For example, the UE sends a session establishment request to the SMF. Correspondingly, the SMF receives the session establishment request from the UE. The session establishment request carries the capability information of the UE. Further, that the UE sends the session establishment request to the SMF may be specifically: The UE sends the session establishment request to an AMF, the AMF selects the SMF, and the AMF sends a session context request to the SMF. Correspondingly, the SMF receives the session context request from the AMF, where the session context request carries the session establishment request, that is, the session context request carries the capability information of the UE. The session establishment request is specifically a PDU session establishment request (PDU session establishment request), and the session context request is specifically a PDU session create session management context request (PDU session create SM context request). The descriptions are also applicable to other embodiments.

Example 2: The SMF determines that a function corresponding to the MPQUIC connection is supported. Alternatively, it is understood that the SMF enables (enable) the function corresponding to the MPQUIC connection, that is, a status, on the SMF, of the function corresponding to the MPQUIC connection is "enabled".

Example 3: The UE sends capability information of the UE to the SMF. The SMF receives the capability information from the UE, and determines, based on the capability information of the UE, that the UE supports MPQUIC connection establishment and that the UE supports a function corresponding to the MPQUIC connection. For details, refer to the example 1 and the example 2.

Step 902: The SMF sends the shared key to the UPF, and the UPF receives the shared key from the SMF.

In a possible implementation, the SMF further sends the identifier of the shared key to the UPF. Correspondingly, the UPF receives the identifier of the shared key from the SMF. The UPF stores the identifier of the shared key and the shared key in a correspondence. For example, the SMF sends the shared key and the identifier of the shared key to the UPF by using a message. The message may be specifically an N4 session establishment (N4 session establishment) request.

The identifier of the shared key may be determined based on the identifier of the MA PDU session. Specifically, there may be the following example a and example b.

Example a: The identifier of the shared key is separately generated by the first function and the UE.

For the first function, the SMF sends the identifier of the MA PDU session to the first function. The identifier of the MA PDU session may be included in the first parameter, or may be sent to the first function as a separate parameter. After deriving the shared key, the first function may further generate the identifier of the shared key based on the identifier of the MA PDU session, and send the identifier of the shared key to the SMF. For the UE, after deriving the shared key, the UE may further generate the identifier of the shared key based on the identifier of the MA PDU session, and store the shared key and the identifier of the shared key.

The first function and the UE determine the identifier of the shared key in a same determining manner. In other words, the first function and the UE determine the same identifier of the shared key. For example, the first function and the UE determine the identifier of the MA PDU session as the identifier of the shared key.

Example b: The identifier of the shared key is generated by the SMF.

The SMF generates the identifier of the shared key based on the identifier of the MA PDU session, and separately sends the identifier of the shared key to the first function and the UE. The identifier of the shared key may be included in the first parameter, or may be sent as a separate parameter. For example, the SMF determines the identifier of the MA PDU session as the identifier of the shared key. It should be noted that, in this case, the SMF needs to send only the identifier of the shared key to the first function, and does not need to send the identifier of the shared key to the UE. This helps reduce signaling exchange.

As described above, both the UE and the UPF may obtain the shared key, or obtain the shared key and the identifier of the shared key. The UE and the UPF may negotiate to establish the MPQUIC connection based on the shared key or based on the shared key and the identifier of the shared key. For specific descriptions, refer to the descriptions in step 601. The "preconfigured key" may be replaced with the "shared key" for understanding.

Step 903: The UPF derives, based on the shared key, a key (namely, a second protection key) for protecting the data of the MPQUIC connection between the UE and the UPF, where the MPQUIC connection is associated with the MA PDU session. For details, refer to the descriptions in step 603.

Optionally, the UE further derives, based on the shared key, a key (that is, a first protection key) for protecting the data of the MPQUIC connection. For details, refer to the descriptions in step 602.

Optionally, the UE and the UPF transmit the data of the MPQUIC connection. For details, refer to the descriptions in step 604.

With reference to the descriptions in the embodiment related to FIG. 9, FIG. 11 shows an example of a first specific implementation of the second communication method according to this application. In the first specific implementation, interaction between an SMF, a UE, a first function, and a UPF is provided.

Refer to the flowchart in FIG. 11.

Step 1101: The SMF sends a second indication to the first function, and correspondingly, the first function receives the second indication from the SMF.

Optionally, after determining to enable a function corresponding to an MPQUIC connection, the SMF sends the second indication to the first function.

Step 1102: The first function derives a shared key based on the second indication.

Step 1103: The first function sends the shared key to the SMF, and correspondingly, the SMF receives the shared key from the first function.

Step 1104: The SMF sends the shared key to the UPF, and correspondingly, the UPF receives the shared key from the SMF.

Optionally, the SMF further sends an identifier of the shared key to the UPF. The identifier of the shared key is determined based on an identifier of an MA PDU session. Optionally, the UPF stores the shared key and the identifier of the shared key.

Step 1105: The SMF sends a first indication to the UE, and correspondingly, the UE receives the first indication from the SMF.

Step 1106: The UE derives the shared key based on the first indication.

Step 1107: The UE derives a first protection key based on the shared key.

Step 1108: The UPF derives a second protection key based on the shared key.

Step 1109: The UE and the UPF transmit data of the MPQUIC connection.

It may be understood that, for content that is not described in detail in FIG. 11, refer to the descriptions in the related embodiment in FIG. 9. Specifically, for content that is not described in detail in step 1101 to step 1103, refer to the descriptions in step 901. For content that is not described in detail in step 1104, refer to the descriptions in step 902. For content that is not described in detail in step 1105 and step 1106, refer to the descriptions in step 901. For content that is not described in detail in step 1107 to step 1109, refer to the descriptions in step 903. A sequence of step 1107 and step 1108 is not limited, and a sequence of step 1101 and step 1105 is not limited.

With reference to the descriptions in the embodiments related to FIG. 9 and FIG. 11,

FIG. 12 shows an example of a second specific implementation of the second communication method according to this application. In the second specific implementation, descriptions are provided with reference to an MA PDU session establishment procedure. A first function is specifically an AMF.

Step 1201: A UE sends a PDU session establishment request to the AMF, and correspondingly, the AMF receives the PDU session establishment request from the UE.

The PDU session establishment request is an example of a session establishment request.

The PDU session establishment request carries a PDU session identifier, a request type, and an ATSSS capability of the UE (an example of capability information of the UE). The request type is an MA PDU request (MA PDU request), to be specific, indicates that a PDU session requested by the UE is an MA PDU session. Correspondingly, the PDU session identifier is an identifier of the MA PDU session. The ATSSS capability of the UE includes an MPQUIC capability, to indicate that the UE supports the MPQUIC capability. Optionally, the ATSSS capability of the UE further includes an MPTCP capability and an ATSSS-LL capability.

Step 1202: The AMF selects an SMF. Specifically, the AMF selects an SMF that supports the ATSSS capability.

Step 1203: The AMF sends a PDU session create session management context request to the SMF, where the PDU session create session management context request carries the PDU session establishment request. Correspondingly, the SMF receives the PDU session create session management context request from the AMF.

The PDU session create session management context request is an example of a session context request.

Step 1204: The SMF determines, based on the PDU session create session management context request, to enable a function corresponding to the MPQUIC connection.

Specifically, the SMF obtains the PDU session establishment request from the PDU session create session management context request, to obtain the request type and the ATSSS capability of the UE from the PDU session establishment request. The SMF determines, based on the request type, that the UE requests the MA PDU session, queries subscription information corresponding to the UE from a UDM, and determines, based on the subscription information corresponding to the UE, that the UE has subscribed to the MA PDU session. Further, the SMF further determines, based on the ATSSS capability of the UE, that the UE supports MPQUIC connection establishment, and determines that the SMF enables the function corresponding to the MPQUIC connection. Therefore, the SMF determines to enable the function corresponding to the MPQUIC connection.

Step 1205: The SMF sends a key derivation request to the AMF, and correspondingly, the AMF receives the key derivation request from the SMF. The key derivation request carries a second indication and a first parameter. The first parameter includes an identifier of the UE and the identifier of the MA PDU session. The identifier of the UE and the identifier of the MA PDU session may be used by the AMF to derive a shared key, and the identifier of the MA PDU session may be used as an identifier of the shared key.

Step 1206: The AMF sends the shared key and an identifier of the shared key to the SMF. Correspondingly, the SMF receives the shared key and the identifier of the shared key from the AMF.

That the AMF sends the shared key and the identifier of the shared key to the SMF may be specifically: The AMF obtains the second indication and the first parameter from the key derivation request, determines, based on the second indication, that the shared key needs to be derived, obtains the identifier of the UE and the identifier of the MA PDU session from the first parameter, and derives the shared key based on the identifier of the UE, the identifier of the MA PDU session, and an upper-level key. The AMF further determines the identifier of the MA PDU session as the identifier of the shared key. The AMF sends the shared key and the identifier of the MA PDU session to the SMF.

Step 1207: The SMF sends an N4 session establishment request to the UPF, where the N4 session establishment request includes the shared key and the identifier of the shared key. Correspondingly, the UPF receives the N4 session establishment request from the SMF.

Step 1208: The UPF stores the shared key and the identifier of the shared key. In addition, the UPF further establishes an N4 session with the SMF.

Step 1209: The SMF sends an N1N2 message transfer message to the AMF, and correspondingly, the AMF receives the N1N2 message transfer message from the SMF, where the N1N2 message transfer message includes a first indication.

For example, the N1N2 message transfer message further includes an ATSSS rule. The ATSSS rule may be specifically obtained by the SMF from a PCF. The ATSSS rule may be used by the UE to determine a steering function applied to a specific data packet flow (for example, using an MPQUIC function after an MPQUIC connection is established).

Step 1210: The AMF sends an N2 PDU session request to a RAN, and correspondingly, the RAN receives the N2 PDU session request from the AMF, where the N2 PDU session request includes the first indication. For example, the N2 PDU session request further includes an ATSSS rule.

Step 1211: The RAN sends an RRC reconfiguration message to the UE, and correspondingly, the UE receives the RRC reconfiguration message from the RAN, where the RRC reconfiguration message includes the first indication. For example, the RRC reconfiguration message further includes an ATSSS rule.

In a specific example, the MA PDU session establishment procedure further includes an AN-specific resource setup procedure. In the AN-specific resource setup procedure, the RAN sends an RRC reconfiguration message to the UE. The RRC reconfiguration message further includes indication information indicating that establishment of the MA PDU session is completed. The indication information is, for example, PDU session establishment accept (PDU session establishment accept).

Step 1212: The UE determines, based on the first indication in the RRC reconfiguration message, that the shared key needs to be derived, obtains the identifier of the UE and the identifier of the MA PDU session, and derives the shared key based on the identifier of the UE, the identifier of the MA PDU session, and an upper-level key. Further, the UE stores the shared key and the identifier of the shared key. It may be understood that the key derivation manner used by the UE is the same as the key derivation manner used by the AMF in step 1206.

Step 1213: The UE derives a first protection key based on the shared key.

Step 1214: The UPF derives a second protection key based on the shared key.

Step 1215: The UE and the UPF transmit data of the MPQUIC connection.

It may be understood that, for content that is not described in detail in FIG. 12, refer to the descriptions in the related embodiment in FIG. 9. For example, for content that is not described in detail in step 1204 to step 1206, refer to the descriptions in step 901. For content that is not described in detail in step 1207 and step 1208, refer to the descriptions in step 902. For content that is not described in detail in step 1209 to step 1212, refer to the descriptions in step 901. For content that is not described in detail in step 1213 to step 1215, refer to the descriptions in step 903.

In the second communication method, the SMF indicates the first function and the UE to derive the shared key, and the SMF further sends the shared key derived by the first function to the UPF. In this way, both the UPF and the UE store the same shared key. The UPF and the UE can establish the MPQUIC connection based on the same shared key, to implement security in a process in which the UE and the UPF establish the MPQUIC connection.

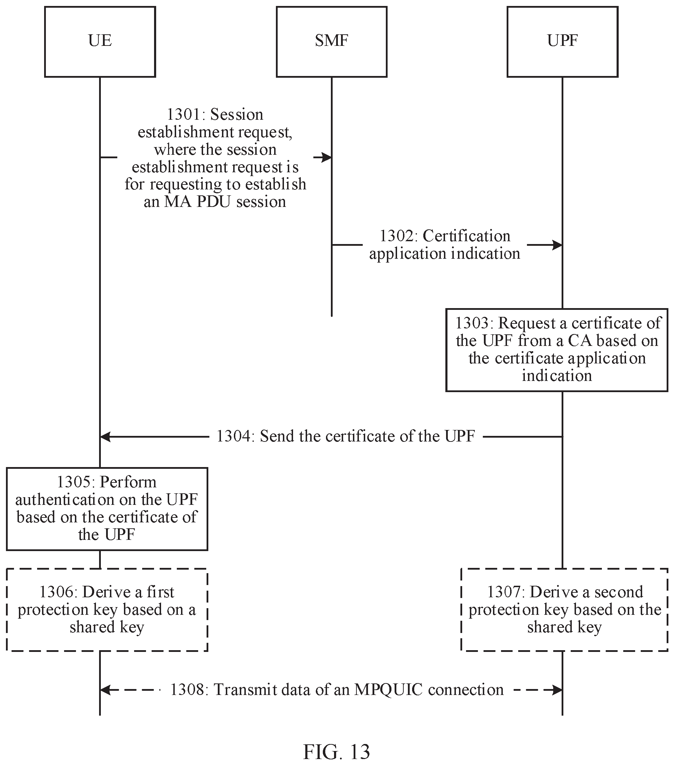

FIG. 13 is an example of a schematic flowchart of the third communication method. The third communication method is specifically applicable to a process of establishing an MA PDU session for a UE. For details about the MA PDU session establishment procedure, refer to 3GPP TS 23.502.

Step 1301: The UE sends a session establishment request to an SMF, and correspondingly, the SMF receives the session establishment request from the UE. The session establishment request is for requesting to establish an MA PDU session of the UE.

For a manner in which the UE sends the session establishment request to the SMF, refer to the descriptions in step 901.

The session establishment request includes a request type, and the request type is an MA PDU request, that is, indicates that a PDU session requested by the UE is an MA PDU session. Alternatively, it is understood that the UE requests to establish the MA PDU session. The session establishment request is specifically a PDU session establishment request. For specific descriptions of the PDU session establishment request, refer to the descriptions in step 1201.

Step 1302: The SMF sends a certificate application indication to a UPF based on the session establishment request, and correspondingly, the UPF receives the certificate application indication from the SMF.

The certificate application indication indicates to request a certificate of the UPF. Specifically, the certificate application indication indicates to request the certificate of the UPF from a certificate authority.

In a possible implementation, the SMF determines, based on the session establishment request, that the PDU session requested by the UE is an MA PDU session, and therefore, sends the certificate application indication to the UPF. For example, the certificate application indication is sent to the UPF in a process of establishing an N4 session between the SMF and the UPF. For example, the certificate application indication is carried in an N4 session establishment request. For example, the N4 session establishment request includes an information element (information element, IE), and the IE is the certificate application indication. In other words, the IE indicates to request the certificate of the UPF.

In a possible implementation, before sending the certificate application indication to the UPF, the SMF may further determine to enable a function corresponding to an MPQUIC connection. For example, that the SMF determines to enable the function corresponding to the MPQUIC connection may be specifically one of the following three examples:
Example 1: The UE sends capability information of the UE to the SMF, where the capability information of the UE indicates that the UE supports MPQUIC connection establishment. The SMF receives the capability information from the UE, and determines, based on the capability information of the UE, that the UE supports MPQUIC connection establishment.
Example 2: The SMF determines that a function corresponding to the MPQUIC connection is supported.
Example 3: The UE sends capability information of the UE to the SMF. The SMF receives the capability information from the UE, and determines, based on the capability information of the UE, that the UE supports MPQUIC connection establishment and that the UE supports a function corresponding to the MPQUIC connection.

For detailed descriptions of the example 1 to the example 3, refer to the descriptions of the example 1 to the example 3 in step 901.

In addition, the capability information of the UE may be included in the session establishment request. In this case, after receiving the session establishment request, the SMF may not only determine that the PDU session requested by the UE is an MA PDU session, but also determine, based on the capability information of the UE, that the UE supports establishment of the MPQUIC connection (that is, the example 1), and therefore, send the certificate application indication to the UPF. Alternatively, after receiving the session establishment request, the SMF may not only determine that the PDU session requested by the UE is an MA PDU session, but also determine, based on the capability information of the UE, that the UE supports establishment of the MPQUIC connection and the function corresponding to the MPQUIC connection (that is, the example 3), and therefore, send the certificate application indication to the UPF.

Step 1303: The UPF requests the certificate of the UPF from the CA based on the certificate application indication.

The certificate of the UPF may be used by the UE to perform authentication on the UPF in a process of establishing the MPQUIC connection between the UE and the UPF. For details, refer to the following step 1304 and step 1305. It may be considered that step 1304 and step 1305 occur in the process of establishing the MPQUIC connection between the UE and the UPF.

In a possible example, the UPF determines, based on the certificate application indication, that the certificate of the UPF needs to be requested from the CA, and sends a second certificate request to the CA. The second certificate request is for requesting the certificate of the UPF. Correspondingly, the CA receives the second certificate request from the UPF, generates the certificate of the UPF based on the second certificate request, and sends the certificate of the UPF to the UPF. The UPF receives the certificate of the UPF from the CA. Optionally, the CA further determines an identifier of the certificate of the UPF, and sends the identifier of the certificate of the UPF to the UPF. The UPF receives the identifier of the certificate of the UPF from the CA. Alternatively, the CA may further include the identifier of the certificate of the UPF in the certificate of the UPF.

The second certificate request includes a public key (public key, pk) of the UPF. Optionally, the second certificate request may further include one or more of the following parameters: an identifier of the MA PDU session and a third indication. The parameters are described as follows:
(1) The public key of the UPF is used by the CA to generate the certificate of the UPF. To be specific, when determining that the certificate of the UPF needs to be requested from the CA, the UPF first generates the public key of the UPF, and sends, to the CA, the second certificate request including the public key of the UPF. For the CA, the CA may generate the certificate of the UPF based on the public key of the UPF. Optionally, the UPF may not only generate the public key of the UPF, but also generate a private key (secret key, sk) of the UPF. Alternatively, it is understood that the UPF generates a public-private key pair (pk, sk) of the UPF, where the private key of the UPF is used by the UPF to sign a transmitted message in the MPQUIC connection establishment process (refer to descriptions in the following step 1305).
(2) The identifier of the MA PDU session is used by the CA to generate the identifier of the certificate of the UPF. Specifically, the CA may determine the identifier of the certificate of the UPF based on the identifier of the MA PDU session. For example, the CA may determine the identifier of the certificate of the UPF based on the identifier of the MA PDU session and a UPF type (type), for example, use the identifier of the MA PDU session and the UPF type as the identifier of the certificate of the UPF. For another example, the CA may determine the identifier of the MA PDU session as the identifier of the certificate of the UPF. In this manner, the UPF requests, from the CA, a certificate of a UPF corresponding to each MA PDU session, and each MA PDU session corresponds to a certificate of one UPF.

It should be added that the CA may not determine the identifier of the certificate of the UPF based on the identifier of the MA PDU session, but generates a random character string, and uses the random character string as the identifier of the certificate of the UPF, or directly uses an identifier of the UPF as the identifier of the certificate of the UPF. In this manner, the UPF requests a certificate of one UPF from the CA. The certificate of the UPF may be used by the UPF to establish MPQUIC connections respectively associated with a plurality of MA PDU sessions. In this way, the UPF does not need to request the certificate of the UPF from the CA for a plurality of times, thereby reducing procedure complexity. Correspondingly, the second certificate request may not include the identifier of the MA PDU session. Optionally, after receiving the second certificate request from the SMF, the UPF first determines whether the certificate of the UPF has been requested from the CA. If the certificate has been requested, the UPF does not need to request the certificate of the UPF from the CA again; otherwise, the UPF requests the certificate of the UPF from the CA.

It may be understood that, in the manner of using the random character string as the identifier of the certificate of the UPF, the UE may obtain, by establishing MPQUIC connections to a plurality of UPFs, random character strings corresponding to certificates of the plurality of UPFs, that is, can learn of a quantity of UPFs included in a core network; or in the manner of using the identifier of the UPF as the identifier of the certificate of the UPF, the UE may obtain identifiers of a plurality of UPFs by establishing MPQUIC connections to the plurality of UPFs, that is, can learn of a quantity of UPFs included in a core network and the identifiers of the UPFs. In this way, the UE can infer a network topology of the core network, which is not conducive to security protection. However, in the solution in which the identifier of the MA PDU session is used as the identifier of the certificate of the UPF, the UE cannot learn of a quantity of UPFs included in the core network, and therefore cannot infer the network topology of the core network. This helps implement security protection of the core network.

(3) The third indication indicates that a certificate to be requested by the second certificate request is used by the UPF to establish the MPQUIC connection to the UE, or indicates that the CA does not need to first authenticate a device (herein, the UPF) when generating a certificate for the device. It may be understood that the third communication method is applicable to a PDU session establishment process. Before the PDU session establishment, an AKA procedure has been completed. In other words, the CA has performed authentication on the UPF, and determines that the authentication on the UPF succeeds. Therefore, when the UPF sends the second certificate request to the CA, the CA does not need to perform authentication on the UPF again, thereby avoiding an unnecessary authentication procedure. For the CA, after obtaining the third indication from the second certificate request, the CA may directly generate the certificate of the UPF for the UPF without performing authentication on the UPF.

In a possible example, after obtaining the certificate of the UPF from the CA, the UPF may further send an acknowledgment indication to the SMF, where the acknowledgment indication indicates that the UPF successfully requests the certificate of the UPF. Correspondingly, after receiving the acknowledgment indication from the UPF, the SMF determines that the UPF successfully requests the certificate of the UPF, and performs a subsequent MA PDU session establishment procedure. After determining that the MA PDU session establishment procedure is completed, the UE initiates a procedure of establishing the MPQUIC connection to the UPF. The acknowledgment indication is, for example, an acknowledgment (acknowledgement, ACK). For example, the acknowledgment indication is carried in an N4 session establishment response. For example, the N4 session establishment response includes an IE, and the IE is the acknowledgment indication. In other words, the IE indicates that the UPF successfully requests the certificate of the UPF. In this way, a problem that the UE fails to establish the MPQUIC connection to the UPF because the UE initiates the procedure of establishing the MPQUIC connection to the UPF when the UPF has not requested the certificate of the UPF is avoided.

Step 1304: The UPF sends the certificate of the UPF to the UE, and correspondingly, the UE receives the certificate of the UPF.

Step 1305: The UE performs authentication on the UPF based on the certificate of the UPF.

In a possible example, the UPF signs previous interaction information by using the private key of the UPF, to obtain signature information of the UPF, and sends the signature information of the UPF and the certificate of the UPF to the UE. Correspondingly, the UE receives the signature information of the UPF and the certificate of the UPF, and performs authentication on the UPF based on the signature information of the UPF and the certificate of the UPF. Herein, the previous interaction information includes information exchanged between the UPF and the UE before the UPF sends the signature information of the UPF and the certificate of the UPF to the UE. For details, refer to content about the two rounds of interaction between the two parties in the TLS protocol: key exchange and identity authentication. The UPF may be considered as the server, and the UE may be considered as the client.

In a possible example, when the identifier of the certificate of the UPF is determined by the CA based on the identifier of the MA PDU session, the UPF may further send the identifier of the certificate of the UPF to the UE. Correspondingly, the UE may further receive the identifier of the certificate of the UPF, and determine that the identifier of the certificate of the UPF is determined based on the identifier of the MA PDU session, that is, determine that the certificate of the UPF is used for the MA PDU session, to avoid abuse of the certificate of the UPF.

The UPF may send the identifier of the certificate of the UPF, the signature information of the UPF, and the certificate of the UPF to the UE by using a verification message.

Optionally, the method further includes the following steps.
Step 1306: The UE derives, based on a shared key, a key (that is, a first protection key) for protecting data of the MPQUIC connection. The shared key is determined by the UE based on an ephemeral private key of the UE and an ephemeral public key of the UPF.
   For details, refer to the descriptions in step 602, and the preconfigured key may be replaced with the shared key for understanding.
Step 1307: The UPF derives, based on a shared key, a key (that is, a second protection key) for protecting the data of the MPQUIC connection. The shared key is determined by the UPF based on an ephemeral public key of the UE and an ephemeral private key of the UPF.

For details, refer to the descriptions in step 603, and the preconfigured key may be replaced with the shared key for understanding.

The ephemeral public key of the UE is sent by the UE to the UPF in the first round of interaction in the TLS protocol, and the ephemeral public key of the UPF is sent by the UPF to the UE in the first round of interaction in the TLS protocol. In other words, the UE and the UPF may exchange respective ephemeral public keys in the first round of interaction in the TLS protocol. Then, the two parties may each derive the shared key based on their own ephemeral private key and the ephemeral public key of the other party.

Step 1308: The UE and the UPF transmit the data of the MPQUIC connection.

The MPQUIC connection is associated with the MA PDU session. The data of the MPQUIC connection is transmitted on a plurality of paths between the UE and the UPF. For the MPQUIC connection, the MA PDU session, and a relationship between the MPQUIC connection and the MA PDU session, refer to the descriptions in step 601. For a manner of transmitting the data of the MPQUIC connection between the UE and the UPF, refer to the description in step 604.

It should be added that, in the embodiment related to FIG. 13, only the UE performs authentication on the UPF based on the certificate of the UPF, that is, one-way authentication. In this scenario, the SMF may determine that one-way authentication is used when the UE and the UPF establish the MPQUIC connection, and then indicate the UPF to request the certificate of the UPF from the CA. In an example, the UE uses one-way authentication by default. After receiving the certificate from the UPF, the UE may perform authentication on the UPF based on the certificate of the UPF. In still another example, the SMF may further send a one-way authentication indication to the UE, where the one-way authentication indication indicates the UE to use one-way authentication when establishing the MPQUIC connection to the UPF. Then, after receiving the certificate from the UPF, the UE may perform authentication on the UPF based on the certificate of the UPF.

In addition, this application may further support mutual authentication. Compared with one-way authentication, in mutual authentication, the following steps a to d are added.

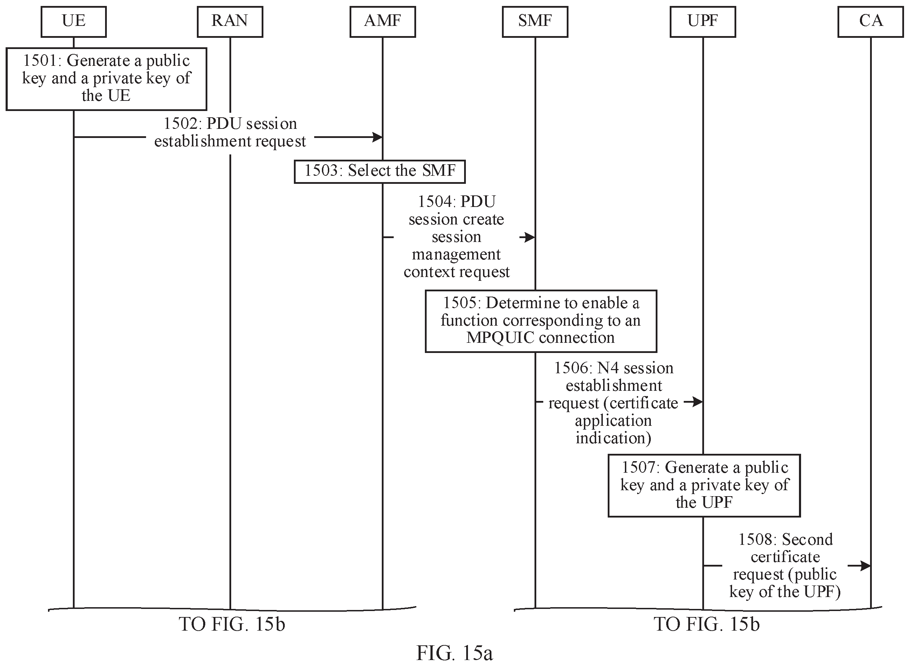

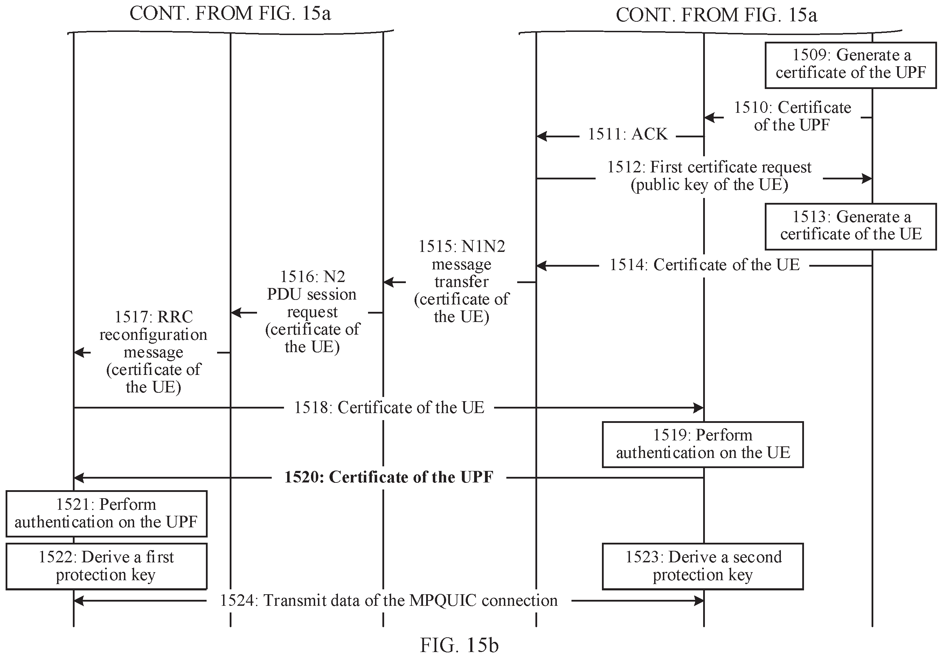

For a time sequence of step a to step d, refer to descriptions in the following embodiment related to FIG. 15a and FIG. 15b. Certainly, the time sequence in the embodiment related to FIG. 15a and FIG. 15b is merely an example of this application, and does not constitute a limitation on this application. For example, the SMF may first indicate the UPF to request the certificate of the UPF from the CA, then request the certificate of the UE from the CA, and send the certificate of the UE to the UE; or the SMF first requests the certificate of the UE from the CA, then sends the certificate of the UE to the UE, and then indicates the UPF to request the certificate of the UPF from the CA.

Step a: The SMF requests a certificate of the UE from the CA.

Optionally, the SMF determines that mutual authentication is used when the UE and the UPF establish an MPQUIC connection, and requests the certificate of the UE from the CA.

In a process in which the SMF requests the certificate of the UE from the CA, specifically, the UE generates a public key of the UE, and sends the public key of the UE to the SMF. The SMF sends a first certificate request to the CA, where the first certificate request includes the public key of the UE. Correspondingly, the CA receives the first certificate request from the SMF, generates the certificate of the UE based on the public key of the UE in the first certificate request, and sends the certificate of the UE to the SMF. Optionally, the CA further determines an identifier of the certificate of the UE, and sends the identifier of the certificate of the UE to the SMF, or the identifier of the certificate of the UE may be carried in the certificate of the UE.

For example, before the UE generates the public key of the UE, the UE may determine, based on capability information of the UE, that the UE supports establishment of the MPQUIC connection, and/or determine to use mutual authentication. For the capability information of the UE, refer to the descriptions of the capability information of the UE in step 901.

For example, the UE may further generate a private key of the UE. For example, the UE generates both the public key and the private key of the UE (that is, a public-private key pair (pk, sk) of the UE). The private key of the UE is used by the UE to sign a transmitted message in an MPQUIC connection establishment process. For details, refer to the following step d.

For example, that the UE sends the public key of the UE to the SMF may be specifically: The UE sends a PDU session establishment request to the AMF, where the PDU session establishment request carries the public key of the UE; then, the AMF sends a PDU session create session management context request to the SMF, where the PDU session create session management context request carries the PDU session establishment request, that is, the create session management context request carries the public key of the UE. For the SMF, the SMF receives the create session management context request, and obtains the public key of the UE from the create session management context request.

The first certificate request may further include one or more of the following parameters: an identifier of an MA PDU session and a third indication. The following separately describes the identifier of the MA PDU session and the third indication.
(1) The identifier of the MA PDU session is used by the CA to generate the identifier of the certificate of the UE. For the CA, the CA may determine the identifier of the certificate of the UE based on the identifier of the MA PDU session. For example, the CA may determine the identifier of the certificate of the UE based on the identifier of the MA PDU session and a UE type (type), for example, use the identifier of the MA PDU session and the UE type as the identifier of the certificate of the UE. In this manner, the UE requests, from the CA, a certificate of a UE corresponding to each MA PDU session, and each MA PDU session corresponds to a certificate of one UE.

It should be noted that, in the mutual authentication, the CA needs to separately generate an identifier of a certificate of the UPF and the identifier of the certificate of the UE. To distinguish the identifier of the certificate of the UPF from the identifier of the certificate of the UE, the CA may use the identifier of the MA PDU session and a UPF type as the identifier of the certificate of the UPF, and use the identifier of the MA PDU session and a UE type as the identifier of the certificate of the UE.

Optionally, the CA may not determine the identifier of the certificate of the UE based on the identifier of the MA PDU session, but generates a random character string, and uses the random character string as the identifier of the certificate of the UE, or directly uses an identifier of the UE as the identifier of the certificate of the UE. In this manner, the SMF requests a certificate of one UE from the CA, and sends the certificate of the UE to the UE. The certificate of the UE may be used by the UE to establish a plurality of MPQUIC connections, and the plurality of MPQUIC connections may correspond to a plurality of MA PDU sessions. In this way, the SMF does not need to request the certificate of the UE from the CA for a plurality of times, thereby reducing procedure complexity. Correspondingly, the first certificate request may not include the identifier of the MA PDU session. Optionally, after receiving the session establishment request from the UE, the SMF may determine whether the certificate of the UE is requested from the CA. If the certificate of the UE is requested from the CA, the SMF determines that the first certificate request does not need to be sent to the CA; otherwise, the SMF sends the first certificate request to the CA.

(2) The third indication indicates that a certificate to be requested by the first certificate request is used by the UE to establish the MPQUIC connection to the UPF, or indicates that the CA does not need to first authenticate a device (herein, the UE) when generating a certificate for the device. It may be understood that the third communication method is applicable to a PDU session establishment process. Before the PDU session establishment, an AKA procedure has been completed. In other words, the CA has performed authentication on the UE, and determines that the authentication on the UE succeeds. Therefore, when the SMF sends the first certificate request to the CA, the CA does not need to perform authentication on the UE again, thereby avoiding an unnecessary authentication procedure. For the CA, after obtaining the third indication from the first certificate request, the CA may directly generate the certificate of the UE for the UE without performing authentication on the UE.

Step b: The SMF sends the certificate of the UE to the UE.

For example, the SMF sends an N1N2 message transfer message to the AMF, where the N1N2 message transfer message includes the certificate of the UE; the AMF sends an N2 PDU session request to the RAN, where the N2 PDU session request includes the certificate of the UE; and the RAN sends an RRC reconfiguration message to the UE, where the RRC reconfiguration message includes the certificate of the UE. For the UE, the UE receives the RRC reconfiguration message, and obtains the certificate of the UE from the RRC reconfiguration message. The RRC reconfiguration message may be considered as an RRC reconfiguration message in an AN-specific resource setup process.

Optionally, the SMF further sends the identifier of the certificate of the UE to the UE, and the certificate of the UE and the identifier of the certificate of the UE are carried in one message. Alternatively, the identifier of the certificate of the UE is carried in the certificate of the UE.

Step c: In a process of establishing the MPQUIC connection between the UE and the UPF, the UE sends the certificate of the UE to the UPF.

In an example, the UE uses mutual authentication by default. After receiving the certificate of the UE from the SMF, the UE may send the certificate of the UE to the UPF, so that the UPF performs authentication on the UE. In another example, the SMF may further send a mutual authentication indication to the UE, where the mutual authentication indication indicates the UE to use mutual authentication when establishing the MPQUIC connection to the UPF. Then, after receiving the certificate of the UE from the SMF, the UE may send the certificate of the UE to the UPF, so that the UPF performs authentication on the UE. A manner of sending the mutual authentication indication may be similar to the manner of sending the certificate of the UE. To be specific, the SMF may send the mutual authentication indication and the certificate of the UE to the UE by using one message. For example, the mutual authentication indication and the certificate of the UE are included in the RRC reconfiguration message.

In addition, alternatively, when the UE sends the session establishment request, the session establishment request does not carry the public key of the UE, but the UE sends the public key of the UE to the SMF after receiving the mutual authentication indication from the SMF.

In a specific implementation, the SMF sends a mutual authentication indication to the UE. A manner of sending the mutual authentication indication may be similar to the manner of sending the certificate of the UE. For example, the mutual authentication indication is included in the RRC reconfiguration message in the AN-specific resource setup procedure (in this case, the RRC configuration message does not include the certificate of the UE). Then, the UE generates the public key of the UE in response to the mutual authentication indication, and sends the public key of the UE to the SMF. The SMF sends the first certificate request to the CA based on the public key of the UE, to request the certificate of the UE. Then, the SMF sends the certificate of the UE to the UE. For example, when the UE sends the public key of the UE to the SMF, specifically, the UE sends a first NAS message to the AMF, where the first NAS message carries the public key of the UE. Then, the AMF obtains the public key of the UE in the first NAS message, and forwards the public key of the UE to the SMF. For example, when the SMF sends the certificate of the UE to the UE, specifically, the SMF sends the certificate of the UE to the AMF, and the AMF includes the certificate of the UE in a second NAS message, and sends the second NAS message to the UE.

In another specific implementation, the MA PDU session procedure further includes an authentication manner notification procedure. In the authentication manner notification procedure, the SMF sends a mutual authentication indication to the UE. For example, the mutual authentication indication is included in an RRC reconfiguration message in the authentication manner notification procedure. Then, the UE generates the public key of the UE in response to the mutual authentication indication, and sends the public key of the UE to the SMF. The SMF sends the first certificate request to the CA based on the public key of the UE, to request the certificate of the UE. Then, the SMF sends the certificate of the UE to the UE. For example, when the UE sends the public key of the UE to the SMF, specifically, the UE sends a first NAS message to the AMF, where the first NAS message carries the public key of the UE. Then, the AMF obtains the public key of the UE in the first NAS message, and forwards the public key of the UE to the SMF. For example, when the SMF sends the certificate of the UE to the UE, specifically, the SMF sends the certificate of the UE to the AMF by using an N1N2 message, the AMF sends the certificate of the UE to the RAN by using an N2 PDU session request, and the RAN sends an RRC reconfiguration message to the UE by using an RRC reconfiguration message. In other words, the certificate of the UE is included in the RRC reconfiguration message in the AN-specific resource setup procedure. It may be understood that the authentication manner notification procedure occurs before the AN-specific resource setup procedure and after the UE sends the session establishment request.

In a possible example, the UE signs previous interaction information by using the private key of the UE, to obtain signature information of the UE, and sends the signature information of the UE and the certificate of the UE to the UPF. For example, the signature information of the UE and the certificate of the UE are carried in one message. Herein, the previous interaction information includes information exchanged between the UE and the UPF before the UE sends the signature information and the certificate to the UPF. For details, refer to content about the two rounds of interaction between the two parties in the TLS protocol: key exchange and identity authentication. The UPF may be considered as the server, and the UE may be considered as the client.

Step d: The UPF performs authentication on the UE based on the certificate of the UE.

In a possible example, the UPF performs authentication on the UE based on the signature information of the UE and the certificate of the UE.

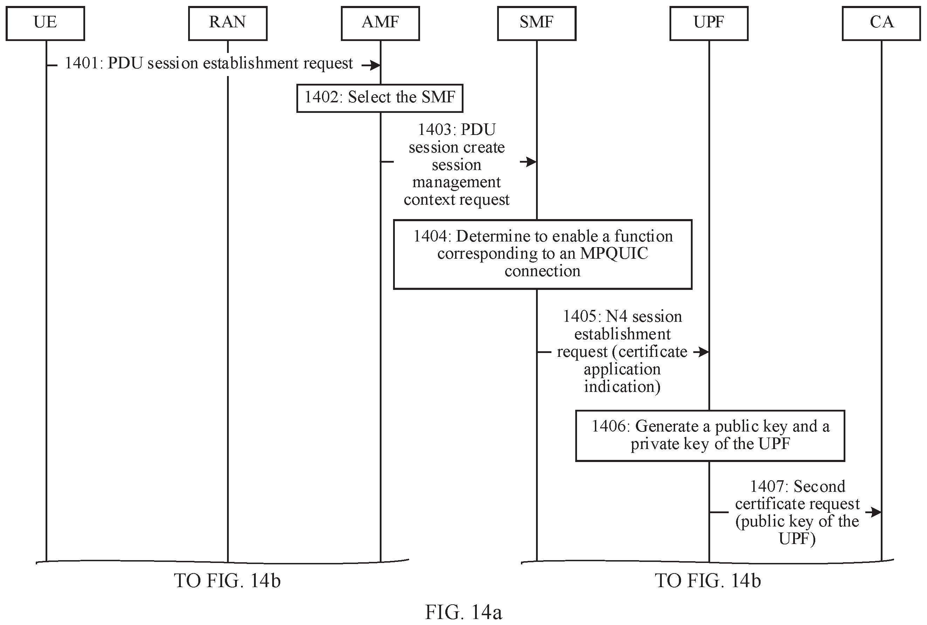

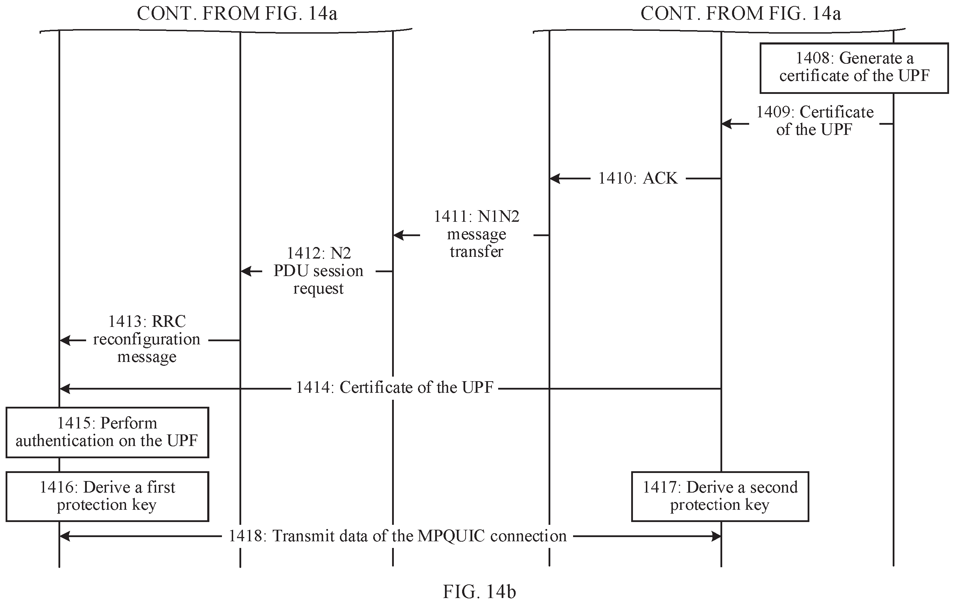

With reference to the descriptions in the embodiment related to FIG. 13, FIG. 14a and FIG. 14b show an example of a first specific implementation of the third communication method according to this application. The first specific implementation is described for one-way authentication, and a UE uses one-way authentication by default.

Step 1401: The UE sends a PDU session establishment request to an AMF, and correspondingly, the AMF receives the PDU session establishment request from the UE.

For specific descriptions, refer to the descriptions in step 1201.

Step 1402: The AMF selects an SMF. Specifically, the AMF selects an SMF that supports an ATSSS capability.

Step 1403: The AMF sends a PDU session create session management context request to the SMF, where the PDU session create session management context request carries the PDU session establishment request. Correspondingly, the SMF receives the PDU session create session management context request from the AMF.

Step 1404: The SMF determines, based on the PDU session create session management context request, to enable a function corresponding to an MPQUIC connection.

For specific descriptions, refer to the descriptions in step 1204.

Step 1405: The SMF sends an N4 session establishment request to a UPF, and correspondingly, the UPF receives the N4 session establishment request from the SMF, where the N4 session establishment request includes a certificate application indication. Optionally, the N4 session establishment request further includes an N4 session identifier and an identifier of an MA PDU session. The SMF locally stores the N4 session identifier and the identifier of the MA PDU session in a correspondence.

Step 1406: The UPF generates a public key and a private key of the UPF.

Optionally, the UPF further establishes an N4 session with the SMF based on the N4 session establishment request.

Step 1407: The UPF sends a second certificate request to a CA, and correspondingly, the CA receives the second certificate request from the UPF, where the second certificate request includes the public key of the UPF. Optionally, the second certificate request further includes the identifier of the MA PDU session and/or a third indication.

Step 1408: The CA generates a certificate of the UPF based on the public key of the UPF.

When the second certificate request further includes the identifier of the MA PDU session, the CA may further determine an identifier of the certificate of the UPF based on the identifier of the MA PDU session. When the second certificate request further includes the third indication, the CA may further determine, based on the third indication, that the UPF does not need to be checked.

Step 1409: The CA sends the certificate of the UPF to the UPF, and correspondingly, the UPF receives the certificate of the UPF from the CA.

Step 1410: The UPF sends an ACK (that is, an example of an acknowledgment indication) to the SMF, and correspondingly, the SMF receives the ACK from the UPF.

Step 1411: The SMF sends an N1N2 message transfer message to the AMF, and correspondingly, the AMF receives the N1N2 message transfer message from the SMF.

For example, the N1N2 message transfer message includes an ATSSS rule. The ATSSS rule may be specifically obtained by the SMF from a PCF. The ATSSS rule may be used by the UE to determine a steering function applied to a specific data packet flow (for example, using an MPQUIC function after an MPQUIC connection is established).

Step 1412: The AMF sends an N2 PDU session request to a RAN, and correspondingly, the RAN receives the N2 PDU session request from the AMF, where the N2 PDU session request includes the ATSSS rule.

Step 1413: The RAN sends an RRC reconfiguration message to the UE, and correspondingly, the UE receives the RRC reconfiguration message from the RAN, where the RRC reconfiguration message includes the ATSSS rule.

In a specific example, in an AN-specific resource setup procedure, the RAN sends an RRC reconfiguration message to the UE. The RRC reconfiguration message further includes indication information indicating that establishment of the MA PDU session is completed. The indication information is, for example, PDU session establishment accept.

Step 1414: The UPF sends the certificate of the UPF to the UE, and correspondingly, the UE receives the certificate of the UPF.

Step 1415: The UE performs authentication on the UPF based on the certificate of the UPF.

Step 1416: The UE derives a first protection key based on a shared key.

Step 1417: The UPF derives a second protection key based on the shared key.

Step 1418: The UE and the UPF transmit data of the MPQUIC connection.

It may be understood that, for content that is not described in detail in FIG. 14a and FIG. 14b, refer to the descriptions in the related embodiment in FIG. 13.

For example, for content that is not described in detail in step 1401 to step 1404, refer to the descriptions in step 1301. For content that is not described in detail in step 1405, refer to the descriptions in step 1302. For content that is not described in detail in step 1406 to step 1410, refer to the descriptions in step 1303. For content that is not described in detail in step 1414 and step 1415, refer to descriptions in step 1304 and step 1305. For content that is not described in detail in step 1416, refer to the descriptions in step 1306. For content that is not described in detail in step 1417, refer to the descriptions in step 1307. For content that is not described in detail in step 1418, refer to the descriptions in step 1308.

In addition, when the UE does not use one-way authentication by default, that is, when the SMF needs to send a one-way authentication indication to the UE, the one-way authentication indication may be separately carried in the N1N2 message transfer message, the N2 PDU session request, and the RRC reconfiguration message. Correspondingly, the UE determines, based on the one-way authentication indication, to use one-way authentication when establishing the MPQUIC connection to the UPF.

With reference to the descriptions in the embodiments related to FIG. 13 and FIG. 14a and FIG. 14b, FIG. 15a and FIG. 15b show an example of a second specific implementation of the third communication method according to this application. The second specific implementation is described for mutual authentication, and a UE uses mutual authentication by default.

Step 1501: The UE generates a public key and a private key of the UE. Specifically, the UE generates the public key and the private key of the UE when determining, based on capability information of the UE, that the UE supports establishment of an MPQUIC connection and/or that mutual authentication is used when the UE and a UPF establish the MPQUIC connection.

Step 1502: A UE sends a PDU session establishment request to the AMF, and correspondingly, the AMF receives the PDU session establishment request from the UE.

For specific descriptions, refer to the descriptions in step 1201.

Step 1503: The AMF selects an SMF. Specifically, the AMF selects an SMF that supports the ATSSS capability.

Step 1504: The AMF sends a PDU session create session management context request to the SMF, where the PDU session create session management context request carries the PDU session establishment request. Correspondingly, the SMF receives the PDU session create session management context request from the AMF.

Step 1505: The SMF determines, based on the PDU session create session management context request, to enable a function corresponding to the MPQUIC connection.

For specific descriptions, refer to the descriptions in step 1204.

Step 1506: The SMF sends an N4 session establishment request to a UPF, and correspondingly, the UPF receives the N4 session establishment request from the SMF, where the N4 session establishment request includes a certificate application indication. For specific descriptions, refer to the descriptions in step 1405.

Step 1507: The UPF generates a public key and a private key of the UPF. For specific descriptions, refer to the descriptions in step 1406.

Step 1508: The UPF sends a second certificate request to a CA, and correspondingly, the CA receives the second certificate request from the UPF. For specific descriptions, refer to the descriptions in step 1407.

Step 1509: The CA generates a certificate of the UPF based on the public key of the UPF. For specific descriptions, refer to the descriptions in step 1408.

Step 1510: The CA sends the certificate of the UPF to the UPF, and correspondingly, the UPF receives the certificate of the UPF from the CA.

Step 1511: The UPF sends an ACK (that is, an example of an acknowledgment indication) to the SMF, and correspondingly, the SMF receives the ACK from the UPF.

Step 1512: The SMF sends a first certificate request to the CA, and correspondingly, the CA receives the first certificate request from the SMF, where the first certificate request includes the public key of the UE. Optionally, the first certificate request further includes an identifier of an MA PDU session and/or a third indication.

Step 1513: The CA generates a certificate of the UE based on the public key of the UE.

When the first certificate request further includes the identifier of the MA PDU session, the CA may further determine an identifier of the public key of the UE based on the identifier of the MA PDU session. When the first certificate request further includes the third indication, the CA may further determine, based on the third indication, that the UE does not need to be checked.

Step 1514: The CA sends the certificate of the UE to the SMF, and correspondingly, the SMF receives the certificate of the UE from the CA.

Step 1515: The SMF sends an N1N2 message transfer message to the AMF, and correspondingly, the AMF receives the N1N2 message transfer message from the SMF, where the N1N2 message transfer message includes the certificate of the UE.

The N1N2 message transfer message further includes an ATSSS rule. The ATSSS rule may be specifically obtained by the SMF from a PCF. The ATSSS rule may be used by the UE to determine a steering function applied to a specific data packet flow (for example, using an MPQUIC function after an MPQUIC connection is established).

Step 1516: The AMF sends an N2 PDU session request to a RAN, and correspondingly, the RAN receives the N2 PDU session request from the AMF, where the N2 PDU session request includes the certificate of the UE. The N2 PDU session request further includes an ATSSS rule.

Step 1517: The RAN sends an RRC reconfiguration message to the UE, and correspondingly, the UE receives the RRC reconfiguration message from the RAN, where the RRC reconfiguration message includes the certificate of the UE. The RRC reconfiguration message further includes an ATSSS rule. In a specific example, in an AN-specific resource setup procedure, the RAN sends an RRC reconfiguration message to the UE. The RRC reconfiguration message further includes indication information indicating that establishment of the MA PDU session is completed. The indication information is, for example, PDU session establishment accept.

Step 1518: The UE sends the certificate of the UE to the UPF, and correspondingly, the UPF receives the certificate of the UE.

Step 1519: The UPF performs authentication on the UE based on the certificate of the UE.

Step 1520: The UPF sends the certificate of the UPF to the UE, and correspondingly, the UE receives the certificate of the UPF.

Step 1521: The UE performs authentication on the UPF based on the certificate of the UPF.

Step 1522: The UE derives a first protection key based on the shared key.

Step 1523: The UPF derives a second protection key based on the shared key.

Step 1524: The UE and the UPF transmit the data of the MPQUIC connection.

It may be understood that for content that is not described in detail in FIG. 15a and FIG. 15b, still refer to descriptions in the related embodiment in FIG. 13. For example, for content that is not described in detail in step 1501, refer to the descriptions in step a. For content that is not described in detail in step 1502 to step 1505, refer to the descriptions in step 1301. For content that is not described in detail in step 1506, refer to the descriptions in step 1302. For content that is not described in detail in step 1507 to step 1511, refer to the descriptions in step 1303. For content that is not described in detail in step 1512 to step 1514, refer to the descriptions in step a. For content that is not described in detail in step 1515 to step 1517, refer to the descriptions in step b. For content that is not described in detail in step 1518 and step 1519, refer to descriptions in step c and step d. For content that is not described in detail in step 1520 and step 1521, refer to descriptions in step 1304 and step 1305. For content that is not described in detail in step 1522, refer to the descriptions in step 1306. For content that is not described in detail in step 1523, refer to the descriptions in step 1307. For content that is not described in detail in step 1524, refer to the descriptions in step 1308.

In addition, when the UE does not use mutual authentication by default, that is, when the SMF needs to send a mutual authentication indication to the UE, the N1N2 message transfer message, the N2 PDU session request, and the RRC reconfiguration message do not carry the certificate of the UE, but carry the mutual authentication indication. Correspondingly, the UE determines, based on the mutual authentication indication, to use mutual authentication when establishing the MPQUIC connection to the UPF. Further, step 1501 and step 1512 to step 1514 occur after step 1517 and before step 1518.

In the one-way authentication in the third communication method, the SMF sends the certificate application indication to the UPF, and the UPF requests the certificate of the UPF from the CA based on the certificate application indication. In a process of establishing the MPQUIC connection between the UE and the UPF, the UPF sends the certificate of the UPF to the UE, and the UE can perform authentication on the UPF by using the certificate of the UPF. In this way, security is implemented in the process in which the UE establishes the MPQUIC connection to the UPF.

In the mutual authentication of the third communication method, the SMF sends the certificate application indication to the UPF, and the UPF requests the certificate of the UPF from the CA based on the certificate application indication. In a process of establishing the MPQUIC connection between the UE and the UPF, the UPF sends the certificate of the UPF to the UE, and the UE can perform authentication on the UPF by using the certificate of the UPF. The SMF further requests the certificate of the UE from the CA, and sends the certificate of the UE to the UE. In the process of establishing the MPQUIC connection between the UE and the UPF, the UE sends the certificate of the UE to the UPF, and the UPF can perform authentication on the UE by using the certificate of the UE. In this way, security is implemented in the process in which the UE establishes the MPQUIC connection to the UPF.

It should be added that step numbers in the flowcharts described in the first communication method to the third communication method are merely examples of execution procedures, and do not constitute a limitation on an execution sequence of the steps. In embodiments of this application, there is no strict execution sequence between steps that do not have a time sequence dependency relationship with each other. Not all the steps shown in each flowchart are mandatory steps. A part of the steps may be deleted from the flowchart based on an actual requirement, or another possible step may be added to the flowchart based on an actual requirement.

The foregoing focuses on differences between different embodiments of the first communication method to the third communication method. In addition to other content of the differences, the first communication method to the third communication method may be mutually referenced. In addition, in a same communication method, different implementations or different examples may also be mutually referenced.

It may be understood that, in the foregoing method embodiments, methods and operations implemented by the terminal device (that is, the UE) may also be implemented by a module (for example, a chip or a circuit) of the terminal device, and the terminal device and the module of the terminal device may be collectively referred to as a terminal apparatus. In other words, the "UE" in the foregoing communication methods may be replaced with the "terminal apparatus". In the following apparatus embodiments, the UE is still used as an example for description.

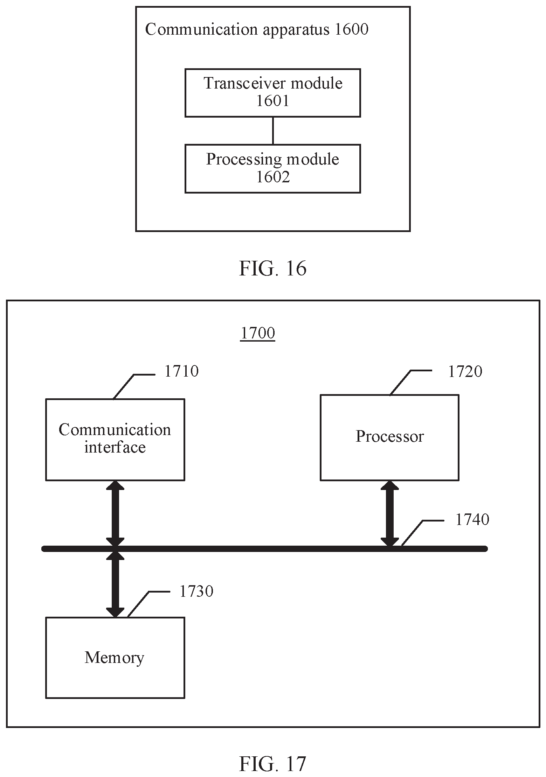

Based on the foregoing content and a same concept, FIG. 16 and FIG. 17 are diagrams of structures of possible communication apparatuses according to this application. These communication apparatuses may be configured to implement functions of the UE, the first function (for example, the AMF), the SMF, or the UPF in the foregoing method embodiments, and therefore can also implement beneficial effects of the foregoing method embodiments.

As shown in FIG. 16, a communication apparatus 1600 includes a transceiver module 1601 and a processing module 1602.

When the communication apparatus 1600 is configured to perform the method of the first UE in the first communication method:
The communication apparatus 1600 may be the UE in FIG. 1 to FIG. 4.

The processing module 1602 is configured to: after establishment of a first MA PDU session of a first UE is completed, control the transceiver module 1601 to negotiate with a first UPF to establish a first MPQUIC connection, where the first MPQUIC connection is associated with the first MA PDU session.

The processing module 1602 is configured to derive, based on a preconfigured key, a key for protecting data of the first MPQUIC connection, where the data of the first MPQUIC connection is transmitted on a plurality of paths between the first UE and the first UPF. The preconfigured key is further used by the first UE to establish a second MPQUIC connection to a second UPF, and the first UPF and the second UPF are located in a same PLMN.

In a possible implementation, when controlling the transceiver module 1601 to negotiate with the first UPF to establish the first MPQUIC connection, the processing module 1602 is specifically configured to control the transceiver module 1601 to send an identifier of the preconfigured key to the first UPF.

In a possible implementation, a message transmitted during the negotiation is protected based on 3GPP security.

In a possible implementation, the preconfigured key used when the first UE and the first UPF negotiate to establish the first MPQUIC connection is the same as a preconfigured key used when a second UE and the first UPF negotiate to establish a third MPQUIC connection. The first UE and the second UE belong to a same H-PLMN.

In a possible implementation, after establishment of the first MA PDU session of the first UE is completed, the processing module 1602 is further configured to: control the transceiver module 1601 to negotiate with the first UPF to establish a fourth MPQUIC connection, where the fourth MPQUIC connection is associated with the first MA PDU session; and derive, based on the preconfigured key, a key for protecting data of the fourth MPQUIC connection, where the key for protecting the data of the first MPQUIC connection is different from the key for protecting the data of the fourth MPQUIC connection.

In a possible implementation, after establishment of a second MA PDU session of the first UE is completed, the processing module 1602 is further configured to control the transceiver module 1601 to negotiate with the second UPF to establish the second MPQUIC connection, where the second MPQUIC connection is associated with the second MA PDU session. The processing module 1602 is further configured to derive, based on the preconfigured key, a key for protecting the data of the second MPQUIC connection.

When the communication apparatus 1600 is configured to perform the method of the first UPF in the first communication method:
The communication apparatus 1600 may be the UPF in FIG. 1 or FIG. 2, or the H-UPF in FIG. 3 or FIG. 4.

The processing module 1602 is configured to: after establishment of a first MA PDU session of a first UE is completed, control the transceiver module 1601 to negotiate with a first UE to establish a first MPQUIC connection, where the first MPQUIC connection is associated with the first MA PDU session.

The processing module 1602 is further configured to derive, based on a preconfigured key, a key for protecting data of the first MPQUIC connection, where the data of the first MPQUIC connection is transmitted on a plurality of paths between the first UE and the first UPF. The preconfigured key is further used by the first UE to establish a second MPQUIC connection to a second UPF, and the first UPF and the second UPF are located in a same PLMN.

In a possible implementation, when controlling the transceiver module 1601 to negotiate with the first UE to establish the first MPQUIC connection, the processing module 1602 is specifically configured to control the transceiver module 1601 to receive an identifier of the preconfigured key from the first UE.

In a possible implementation, a message transmitted during the negotiation is protected based on 3GPP security.

In a possible implementation, the preconfigured key used when the first UPF and the first UE negotiate to establish the first MPQUIC connection is the same as a preconfigured key used when the first UPF and a second UE negotiate to establish a third MPQUIC connection. The first UE and the second UE belong to a same H-PLMN.

In a possible implementation, after establishment of the first MA PDU session of the first UE is completed, the processing module 1602 is further configured to: control the transceiver module 1601 to negotiate with the first UE to establish a fourth MPQUIC connection, where the fourth MPQUIC connection is associated with the first MA PDU session; and derive, based on the preconfigured key, a key for protecting data of the fourth MPQUIC connection, where the key for protecting the data of the first MPQUIC connection is different from the key for protecting the data of the fourth MPQUIC connection.

When the communication apparatus 1600 is configured to perform the method of the SMF in the second communication method:
The communication apparatus 1600 may be the SMF in FIG. 1 or FIG. 2, or the H-SMF in FIG. 3 or FIG. 4.

In a process of establishing an MA PDU session for a UE, the processing module 1602 is configured to: obtain a shared key from a first function, and send the shared key to a UPF, where the shared key is used by the UPF to derive a key for protecting data of an MPQUIC connection between the UE and the UPF, the MPQUIC connection is associated with the MA PDU session, and the data of the MPQUIC connection is transmitted on a plurality of paths between the UE and the UPF.

In a possible implementation, the processing module 1602 is further configured to control the transceiver module 1601 to send a first indication to the UE, where the first indication indicates the UE to establish the MPQUIC connection to the UPF in a shared key manner.

In a possible implementation, before obtaining the shared key from the first function, the processing module 1602 is further configured to determine to enable a function corresponding to the MPQUIC connection. In a possible implementation, when determining to enable the function corresponding to the MPQUIC connection, the processing module 1602 is specifically configured to: control the transceiver module 1601 to receive capability information from the UE, and determine, based on the capability information of the UE, that the UE supports establishment of the MPQUIC connection; and/or determine that the function corresponding to the MPQUIC connection is supported.

In a possible implementation, when obtaining the shared key from the first function, the processing module 1602 is specifically configured to: control the transceiver module 1601 to send a second indication to the first function, where the second indication indicates the first function to derive the shared key; and control the transceiver module 1601 to receive the shared key from the first function.

In a possible implementation, after obtaining the shared key from the first function, the processing module 1602 is further configured to control the transceiver module 1601 to send an identifier of the shared key to the UPF. In an example, the identifier of the shared key is determined by the processing module 1602 based on an identifier of the MA PDU session. Correspondingly, the processing module 1602 is further configured to: control the transceiver module 1601 to send the identifier of the shared key to the first function, and/or control the transceiver module 1601 to send the identifier of the shared key to the UE. In another example, the identifier of the shared key is determined by the first function based on an identifier of the MA PDU session. Correspondingly, the processing module 1602 is further configured to: control the transceiver module 1601 to send the identifier of the MA PDU session to the first function, and receive the identifier of the shared key from the first function.

In a possible implementation, the identifier of the shared key is the identifier of an MA PDU session.

When the communication apparatus 1600 is configured to perform the method of the UPF in the second communication method:
The communication apparatus 1600 may be the UPF in FIG. 1 or FIG. 2, or the H-UPF in FIG. 3 or FIG. 4.

In a process of establishing an MA PDU session for a UE, the transceiver module 1601 is configured to receive a shared key from an SMF. The processing module 1602 is configured to derive, based on the shared key, a key for protecting data of an MPQUIC connection between the UE and the UPF, where the MPQUIC connection is associated with the MA PDU session, and the data of the MPQUIC connection is transmitted on a plurality of paths between the UE and the UPF.

In a possible implementation, the transceiver module 1601 is further configured to receive an identifier of the shared key from the SMF, where the identifier of the shared key is determined by the SMF or a first function based on an identifier of the MA PDU session. The processing module 1602 is further configured to store the identifier of the shared key and the shared key in a correspondence. In a possible implementation, the identifier of the shared key is the identifier of an MA PDU session.

When the communication apparatus 1600 is configured to perform the method of the UE in the second communication method:
The communication apparatus 1600 may be the UE in FIG. 1 to FIG. 4.

In a process of establishing an MA PDU session for a UE, the transceiver module 1601 is configured to receive a first indication from an SMF, where the first indication indicates the UE to establish an MPQUIC connection to a UPF in a shared key manner, and the MPQUIC connection is associated with the MA PDU session. The processing module 1602 is configured to: derive a shared key based on the first indication; and derive, based on the shared key, a key for protecting data of the MPQUIC connection, where the data of the MPQUIC connection is transmitted on a plurality of paths between the UE and the UPF.

In a possible implementation, the transceiver module 1601 is further configured to send capability information of the UE to the SMF, where the capability information of the UE indicates that the UE supports MPQUIC connection establishment.

In a possible implementation, when deriving the shared key based on the first indication, the processing module 1602 is specifically configured to derive the shared key based on the first indication and one or more of the following parameters: an identifier of the UE, an identifier of the MA PDU session, and an upper-level key. For example, the upper-level key includes one or more of the following: an AUSF key, an SEAF key, a RAN key, and an AMF key.

In a possible implementation, an identifier of the shared key is determined by the SMF based on the identifier of the MA PDU session. The transceiver module 1601 is further configured to receive the identifier of the shared key from the SMF.

In a possible implementation, the identifier of the shared key is determined by the UE based on the identifier of the MA PDU session. In other words, the processing module 1602 is further configured to determine the identifier of the shared key based on the identifier of the MA PDU session.

In a possible implementation, the processing module 1602 is further configured to store the identifier of the shared key and the shared key in a correspondence.

In a possible implementation, the identifier of the shared key is the identifier of an MA PDU session.

When the communication apparatus 1600 is configured to perform the method of the first function in the second communication method:
For example, the communication apparatus 1600 is an AMF, an SEAF, or an AUSF. For example, when the communication apparatus 1600 is an AMF, the communication apparatus 1600 may be specifically the AMF in FIG. 1 or FIG. 2, the V-AMF in FIG. 3, or the H-AMF or the V-AMF in FIG. 4. In the scenario of FIG. 4, the communication apparatus may be specifically an AMF corresponding to 3GPP access.

In a process of establishing an MA PDU session for a UE, the transceiver module 1601 is configured to receive a second indication from an SMF. The processing module 1602 is configured to derive a shared key based on the second indication. The transceiver module 1601 is further configured to send the shared key to the SMF, where the shared key is for deriving a key for protecting data of an MPQUIC connection between the UE and the UPF, the MPQUIC connection is associated with the MA PDU session, and the data of the MPQUIC connection is transmitted on a plurality of paths between the UE and the UPF.

In a possible implementation, an identifier of the shared key is determined by the SMF based on the identifier of the MA PDU session. The transceiver module 1601 is further configured to receive the identifier of the shared key from the SMF. In a possible implementation, the identifier of the shared key is determined by the AMF based on the identifier of the MA PDU session. In other words, the transceiver module 1601 is further configured to receive the identifier of the MA PDU session from the SMF, and the processing module 1602 is further configured to determine the identifier of the shared key based on the identifier of the MA PDU session.

In a possible implementation, when deriving the shared key based on the second indication, the processing module 1602 is specifically configured to derive the shared key based on the second indication and one or more of the following parameters: an identifier of the UE, an identifier of the MA PDU session, and an upper-level key. For example, when the first function is an AMF, the upper-level key includes one or more of the following: a RAN key and an AMF key; when the first function is an SEAF, the upper-level key may be an SEAF key; when the first function is an AUSF, the upper-level key may be an AUSF key.

When the communication apparatus 1600 is configured to perform the method of the SMF in the third communication method:
The communication apparatus 1600 may be the SMF in FIG. 1 or FIG. 2, or the H-SMF in FIG. 3 or FIG. 4.

In a process of establishing an MA PDU session for a UE, the transceiver module 1601 is configured to receive a session establishment request from a UE, where the session establishment request is for requesting to establish an MA PDU session of the UE. The processing module 1602 is configured to control, based on the session establishment request, the transceiver module 1601 to send a certificate application indication to a UPF, where the certificate application indication indicates to request a certificate of the UPF from a CA. In a process of establishing an MPQUIC connection between the UE and the UPF, the certificate of the UPF is used by the UE to perform authentication on the UPF, the MPQUIC connection is associated with the MA PDU session, and data of the MPQUIC connection is transmitted on a plurality of paths between the UE and the UPF.

In a possible implementation, after controlling the transceiver module 1601 to send the certificate application indication to the UPF, the processing module 1602 is further configured to control the transceiver module 1601 to receive an acknowledgment indication from the UPF, where the acknowledgment indication indicates that the UPF successfully requests the certificate of the UPF. For example, the processing module 1602 is further configured to determine, based on the acknowledgment indication, that the UPF successfully requests the certificate of the UPF.

In a possible implementation, the transceiver module 1601 is further configured to send a first certificate request to the CA, where the first certificate request includes a public key of the UE, and the public key of the UE is used by the CA to generate a certificate of the UE. The transceiver module 1601 is further configured to: receive the certificate of the UE from the CA, and send the certificate of the UE to the UE, where the certificate of the UE is used by the UPF to perform authentication on the UE in a process of establishing the MPQUIC connection.

In a possible implementation, before sending the first certificate request to the CA, the transceiver module 1601 is further configured to send a mutual authentication indication to the UE, where the mutual authentication indication indicates that an authentication manner in the process of establishing the MPQUIC connection is a mutual authentication manner. The transceiver module 1601 is further configured to receive the public key of the UE. For example, the mutual authentication indication may be carried in a radio resource control reconfiguration message.

In a possible implementation, the session establishment request includes the public key of the UE. For example, the certificate of the UE may be carried in a radio resource control reconfiguration message.

In a possible implementation, the first certificate request further includes an identifier of the MA PDU session, and the identifier of the MA PDU session is for determining an identifier of the certificate of the UE. In a possible implementation, the transceiver module 1601 is further configured to send an identifier of the MA PDU session to the UPF, where the identifier of the MA PDU session is for determining an identifier of the certificate of the UPF.

In a possible implementation, before controlling the transceiver module 1601 to send the certificate application indication to the UPF, the processing module 1602 is further configured to determine to enable a function corresponding to the MPQUIC connection. For example, when determining to enable the function corresponding to the MPQUIC connection, the processing module 1602 is specifically configured to: control the transceiver module 1601 to receive capability information from the UE, and determine, based on the capability information of the UE, that the UE supports establishment of the MPQUIC connection; and/or determine that the function corresponding to the MPQUIC connection is supported.

When the communication apparatus 1600 is configured to perform the method of the UE in the third communication method:
The communication apparatus 1600 may be the UE in FIG. 1 to FIG. 4.

In a process of establishing an MA PDU session for a UE, the transceiver module 1601 is configured to send a session establishment request to an SMF, where the session establishment request is for requesting to establish an MA PDU session for the UE. In a process of establishing an MPQUIC connection between the UE and the UPF, the transceiver module 1601 is configured to receive the certificate of the UPF from the UPF, and the processing module 1602 is configured to perform authentication on the UPF based on the certificate of the UPF, where the MPQUIC connection is associated with the MA PDU session, and data of the MPQUIC connection is transmitted on a plurality of paths between the UE and the UPF.

In a possible implementation, in a process of establishing the MPQUIC connection between the UE and the UPF, the transceiver module 1601 is further configured to: receive the certificate of the UE from the SMF, and send the certificate of the UE to the UPF, where the certificate of the UE is used by the UPF to perform authentication on the UE.

In a possible implementation, the session establishment request includes a public key of the UE, and the public key of the UE is used by the SMF to request the certificate of the UE from a CA. Before the transceiver module 1601 sends the session establishment request to the SMF, the processing module 1602 is further configured to generate the public key of the UE. For example, the certificate of the UE is carried in an RRC reconfiguration message.

In a possible implementation, the transceiver module 1601 is further configured to receive a mutual authentication indication from the SMF, where the mutual authentication indication indicates that an authentication manner in the process of establishing the MPQUIC connection is a mutual authentication manner. The processing module 1602 is further configured to generate a public key of the UE based on the mutual authentication indication. The transceiver module 1601 is further configured to send the public key of the UE to the SMF, where the public key of the UE is used by the SMF to request the certificate of the UE from the CA. For example, the mutual authentication indication is carried in an RRC reconfiguration message.

In a possible implementation, the processing module 1602 is further configured to generate a private key of the UE, where the private key of the UE is used by the UE to sign a transmitted message in the process of establishing the MPQUIC connection.

In a possible implementation, the transceiver module 1601 is further configured to receive an identifier of the certificate of the UPF from the UPF. The processing module 1602 is further configured to determine that the identifier of the certificate of the UPF is determined based on an identifier of the MA PDU session.

In a possible implementation, the transceiver module 1601 is further configured to send capability information of the UE to the SMF, where the capability information of the UE indicates that the UE supports MPQUIC connection establishment.

When the communication apparatus 1600 is configured to perform the method of the UPF in the third communication method:
The communication apparatus 1600 may be the UPF in FIG. 1 or FIG. 2, or the H-UPF in FIG. 3 or FIG. 4.

In a process of establishing an MA PDU session of a UE, the transceiver module 1601 is configured to receive a certificate application indication from an SMF. The processing module 1602 is further configured to control the transceiver module 1601 to request a certificate of a UPF from a CA based on the certificate application indication. In a process of establishing an MPQUIC connection between the UE and the UPF, the transceiver module 1601 is further configured to send the certificate of the UPF to the UE, where the certificate of the UPF is used by the UE to perform authentication on the UPF. The MPQUIC connection is associated with the MA PDU session, and data of the MPQUIC connection is transmitted on a plurality of paths between the UE and the UPF.

In a possible implementation, when requesting the certificate of the UPF from the CA, the transceiver module 1601 is specifically configured to: send a second certificate request to the CA, where the second certificate request is for requesting the certificate of the UPF from the CA; and receive the certificate of the UPF from the CA.

In a possible implementation, in the process of establishing the MPQUIC connection between the UE and the UPF, the transceiver module 1601 is further configured to receive a certificate of the UE. The processing module 1602 is further configured to perform authentication on the UE based on the certificate of the UE.

In a possible implementation, the second certificate request includes a public key of the UPF, and the public key of the UPF is used by the CA to determine the certificate of the UPF. In other words, before the transceiver module 1601 sends the second certificate request, the processing module 1602 is further configured to generate the public key of the UPF.

In a possible implementation, the processing module 1602 is further configured to generate a private key of the UPF, where the private key of the UPF is used by the UPF to sign a transmitted message in the process of establishing the MPQUIC connection.

In a possible implementation, the second certificate request further includes an identifier of the MA PDU session, and the identifier of the MA PDU session is for determining an identifier of the certificate of the UPF. In other words, before sending the second certificate request, the transceiver module 1601 is further configured to receive the identifier of the MA PDU session from the SMF.

In a possible implementation, after successfully obtaining the certificate of the UPF from the CA, the transceiver module 1601 is further configured to send an acknowledgment indication to the SMF, where the acknowledgment indication indicates that the UPF successfully requests the certificate of the UPF.

FIG. 17 shows an apparatus 1700 according to an embodiment of this application. The apparatus shown in FIG. 17 may be an implementation of a hardware circuit of the apparatus shown in FIG. 16. The apparatus is applicable to the flowchart shown above, and performs functions of the UE, the first function (for example, the AMF), the SMF, or the UPF in the foregoing method embodiments. For ease of description, FIG. 17 shows only main components of the apparatus.

The apparatus 1700 shown in FIG. 17 includes a communication interface 1710, a processor 1720, and a memory 1730. The memory 1730 is configured to store program instructions and/or data. The processor 1720 may cooperate with the memory 1730. The processor 1720 may execute the program instructions stored in the memory 1730. When the instructions or a program stored in the memory 1730 is executed, the processor 1720 is configured to perform an operation performed by the processing module 1602 in the foregoing embodiments, and the communication interface 1710 is configured to perform an operation performed by the transceiver module 1601 in the foregoing embodiments.

The memory 1730 is coupled to the processor 1720. The coupling in this embodiment of this application may be an indirect coupling or a communication connection between apparatuses, units, or modules in an electrical form, a mechanical form, or another form, and is used for information exchange between the apparatuses, the units, or the modules. At least one memory 1730 may be included in the processor 1720.

In this embodiment of this application, the communication interface may be a transceiver, a circuit, a bus, a module, or another type of communication interface. In this embodiment of this application, when the communication interface is a transceiver, the transceiver may include an independent receiver and an independent transmitter, or may be a transceiver integrated with a transceiver function, or a communication interface.

The apparatus 1700 may further include a communication line 1740. The communication interface 1710, the processor 1720, and the memory 1730 may be connected to each other through the communication line 1740. The communication line 1740 may be a peripheral component interconnect (peripheral component interconnect, PCI for short) bus, an extended industry standard architecture (extended industry standard architecture, EISA for short) bus, or the like. The communication line 1740 may be classified into an address bus, a data bus, a control bus, and the like. For ease of representation, the bus is indicated by only one bold line in FIG. 17, but this does not mean that there is only one bus or only one type of bus.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, a user device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" usually indicates an "or" relationship between associated objects. "Including at least one of A, B, and C" may represent: including A; including B; including C; including A and B; including A and C; including B and C; and including A, B, and C. It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
after establishment of a first multiple access protocol data unit MA PDU session of a first terminal apparatus is completed, negotiating, by the first terminal apparatus, with a first user plane function to establish a first multipath quick user datagram protocol internet connection MPQUIC connection, wherein the first MPQUIC connection is associated with the first MA PDU session; and
deriving, by the first terminal apparatus based on a preconfigured key, a key for protecting data of the first MPQUIC connection, wherein the data of the first MPQUIC connection is transmitted on a plurality of paths between the first terminal apparatus and the first user plane function, wherein
the preconfigured key is further used by the first terminal apparatus to establish a second MPQUIC connection to a second user plane function.

2. The method according to claim 1, wherein negotiating, by the first terminal apparatus, with the first user plane function to establish the first MPQUIC connection comprises:
sending, by the first terminal apparatus, an identifier of the preconfigured key to the first user plane function.

3. The method according to claim 1 or 2, wherein a message transmitted during the negotiation is protected based on 3GPP security.

4. The method according to any one of claims 1 to 3, wherein
the preconfigured key used when the first terminal apparatus and the first user plane function negotiate to establish the first MPQUIC connection is the same as a preconfigured key used when a second terminal apparatus and the first user plane function negotiate to establish a third MPQUIC connection.

5. The method according to any one of claims 1 to 4, after establishment of the first MA PDU session of the first terminal apparatus is completed, the method further comprises:
negotiating, by the first terminal apparatus, with the first user plane function to establish a fourth MPQUIC connection, wherein the fourth MPQUIC connection is associated with the first MA PDU session; and
deriving, by the first terminal apparatus based on the preconfigured key, a key for protecting data of the fourth MPQUIC connection, wherein the key for protecting the data of the first MPQUIC connection is different from the key for protecting the data of the fourth MPQUIC connection.

6. The method according to any one of claims 1 to 5, further comprising:
after establishment of a second MA PDU session of the first terminal apparatus is completed, negotiating, by the first terminal apparatus, with the second user plane function to establish the second MPQUIC connection, wherein the second MPQUIC connection is associated with the second MA PDU session; and
deriving, by the first terminal apparatus based on the preconfigured key, a key for protecting data of the second MPQUIC connection.

7. A communication method, comprising:
after establishment of a first multiple access protocol data unit MA PDU session of a first terminal apparatus is completed, negotiating, by a first user plane function, with the first terminal apparatus to establish a first multipath quick user datagram protocol internet connection MPQUIC connection, wherein the first MPQUIC connection is associated with the first MA PDU session; and
deriving, by the first user plane function based on a preconfigured key, a key for protecting data of the first MPQUIC connection, wherein the data of the first MPQUIC connection is transmitted on a plurality of paths between the first terminal apparatus and the first user plane function, wherein
the preconfigured key is further used by the first terminal apparatus to establish a second MPQUIC connection to a second user plane function.

8. The method according to claim 7, wherein negotiating, by the first user plane function, with the first terminal apparatus to establish the first MPQUIC connection comprises:
receiving, by the first user plane function, an identifier of the preconfigured key from the first terminal apparatus.

9. The method according to claim 7 or 8, wherein a message transmitted during the negotiation is protected based on 3GPP security.

10. The method according to any one of claims 7 to 9, wherein
the preconfigured key used when the first user plane function and the first terminal apparatus negotiate to establish the first MPQUIC connection is the same as a preconfigured key used when the first user plane function and a second terminal apparatus negotiate to establish a third MPQUIC connection.

11. The method according to any one of claims 7 to 10, wherein after establishment of the first MA PDU session of the first terminal apparatus is completed, the method further comprises:
negotiating, by the first user plane function, with the first terminal apparatus to establish a fourth MPQUIC connection, wherein the fourth MPQUIC connection is associated with the first MA PDU session; and
deriving, by the first user plane function based on the preconfigured key, a key for protecting data of the fourth MPQUIC connection, wherein the key for protecting the data of the first MPQUIC connection is different from the key for protecting the data of the fourth MPQUIC connection.

12. A communication method, applicable to a process of establishing a multiple access protocol data unit MA PDU session for a terminal apparatus, wherein the method comprises:
obtaining, by a session management function, a shared key from a first function; and
sending, by the session management function, the shared key to a user plane function, wherein the shared key is for deriving a key for protecting data of a multipath quick user datagram protocol internet connection MPQUIC connection between the terminal apparatus and the user plane function, the MPQUIC connection is associated with the MA PDU session, and the data of the MPQUIC connection is transmitted on a plurality of paths between the terminal apparatus and the user plane function.

13. The method according to claim 12, further comprising:
sending, by the session management function, a first indication to the terminal apparatus, wherein the first indication indicates the terminal apparatus to establish the MPQUIC connection to the user plane function in a shared key manner.

14. The method according to claim 12 or 13, wherein before obtaining, by the session management function, the shared key from the first function, the method further comprises:
determining, by the session management function, to enable a function corresponding to the MPQUIC connection.

15. The method according to claim 14, wherein determining, by the session management function, to enable the function corresponding to the MPQUIC connection comprises:
receiving, by the session management function, capability information from the terminal apparatus, and determining, based on the capability information of the terminal apparatus, that the terminal apparatus supports establishment of the MPQUIC connection; and/or
supporting, by the session management function, the function corresponding to the MPQUIC connection.

16. The method according to any one of claims 12 to 15, wherein obtaining, by the session management function, the shared key from the first function comprises:
sending, by the session management function, a second indication to the first function, wherein the second indication indicates to derive the shared key; and
receiving, by the session management function, the shared key from the first function.

17. The method according to any one of claims 12 to 16, further comprising:
sending, by the session management function, an identifier of the shared key to the user plane function.

18. The method according to any one of claims 12 to 17, wherein the identifier of the shared key is determined by the session management function based on an identifier of the MA PDU session, and the method further comprises:
sending, by the session management function, the identifier of the shared key to the first function; and/or
sending, by the session management function, the identifier of the shared key to the terminal apparatus.

19. The method according to any one of claims 12 to 17, wherein the identifier of the shared key is determined by the first function based on an identifier of the MA PDU session, and the method further comprises:
sending, by the session management function, the identifier of the MA PDU session to the first function; and
receiving, by the session management function, the identifier of the shared key from the first function.

20. The method according to any one of claims 12 to 19, wherein
the identifier of the shared key is the identifier of the MA PDU session.

21. The method according to any one of claims 12 to 20, wherein the first function is an access management function, a security anchor function, or an authentication server function.

22. A communication method, applicable to a process of establishing an MA PDU session for a terminal apparatus, wherein the method comprises:
receiving, by a user plane function, a shared key from a session management function; and
deriving, by the user plane function based on the shared key, a key for protecting data of an MPQUIC connection between the terminal apparatus and the user plane function, wherein the MPQUIC connection is associated with the MA PDU session, and the data of the MPQUIC connection is transmitted on a plurality of paths between the terminal apparatus and the user plane function.

23. The method according to claim 22, further comprising:
receiving, by the user plane function, an identifier of the shared key from the session management function, wherein the identifier of the shared key is determined by the session management function or an access management function based on an identifier of the MA PDU session; and
storing, by the user plane function, the identifier of the shared key and the shared key in a correspondence.

24. The method according to claim 22 or 23, wherein
the identifier of the shared key is the identifier of the MA PDU session.

25. A communication method, applicable to a process of establishing an MA PDU session for a terminal apparatus, wherein the method comprises:
receiving, by the terminal apparatus, a first indication from a session management function, wherein the first indication indicates the terminal apparatus to establish an MPQUIC connection to a user plane function in a shared key manner, and the MPQUIC connection is associated with the MA PDU session;
deriving, by the terminal apparatus, a shared key based on the first indication; and
deriving, by the terminal apparatus based on the shared key, a key for protecting data of the MPQUIC connection, wherein the data of the MPQUIC connection is transmitted on a plurality of paths between the terminal apparatus and the user plane function.

26. The method according to claim 25, further comprising:
sending, by the terminal apparatus, capability information of the terminal apparatus to the session management function, wherein the capability information of the terminal apparatus indicates that the terminal apparatus supports establishment of the MPQUIC connection.

27. The method according to claim 25 or 26, wherein deriving, by the terminal apparatus, the shared key based on the first indication comprises:
deriving, by the terminal apparatus, the shared key based on the first indication and one or more of the following parameters:
an identifier of the terminal apparatus, an identifier of the MA PDU session, and an upper-level key.

28. The method according to claim 27, wherein the upper-level key comprises one or more of the following: a security anchor function key, a base station key, and an access management function key.

29. The method according to any one of claims 25 to 28, wherein an identifier of the shared key is determined by the session management function based on the identifier of the MA PDU session, and the method further comprises:
receiving, by the terminal apparatus, the identifier of the shared key from the session management function.

30. The method according to any one of claims 25 to 29, further comprising:
determining, by the terminal apparatus, the identifier of the shared key based on the identifier of the MA PDU session.

31. The method according to any one of claims 25 to 30, further comprising:
storing, by the terminal apparatus, the identifier of the shared key and the shared key in a correspondence.

32. The method according to any one of claims 25 to 31, wherein the identifier of the shared key is the identifier of the MA PDU session.

33. A communication method, applicable to a process of establishing an MA PDU session for a terminal apparatus, wherein the method comprises:
receiving, by a first function, a second indication from a session management function;
deriving, by the first function, a shared key based on the second indication; and
sending, by the first function, the shared key to the session management function, wherein
the shared key is for deriving a key for protecting data of an MPQUIC connection between the terminal apparatus and a user plane function, wherein the MPQUIC connection is associated with the MA PDU session, and the data of the MPQUIC connection is transmitted on a plurality of paths between the terminal apparatus and the user plane function.

34. The method according to claim 33, wherein an identifier of the shared key is determined by the session management function based on an identifier of the MA PDU session, and the method further comprises:
receiving, by the first function, the identifier of the shared key from the session management function.

35. The method according to claim 33, further comprising:
receiving, by the first function, an identifier of the MA PDU session from the session management function; and
determining, by the first function, an identifier of the shared key based on the identifier of the MA PDU session.

36. The method according to any one of claims 33 to 35, wherein deriving, by the first function, the shared key based on the second indication comprises:
deriving, by the first function, the shared key based on the second indication and one or more of the following parameters:
an identifier of the terminal apparatus, the identifier of the MA PDU session, and an upper-level key.

37. The method according to claim 36, wherein the upper-level key comprises one or more of the following: a security anchor function key, a base station key, and an access management function key.

38. A communication method, comprising:
receiving, by a session management function, a session establishment request from a terminal apparatus, wherein the session establishment request is for requesting to establish a multiple access protocol data unit MA PDU session of the terminal apparatus; and
sending, by the session management function, a certificate application indication to a user plane function based on the session establishment request, wherein the certificate application indication indicates to request a certificate of the user plane function from a certificate authority, and the certificate of the user plane function is used by the terminal apparatus to perform authentication on the user plane function in a process of establishing a multipath quick user datagram protocol internet connection MPQUIC connection between the terminal apparatus and the user plane function, wherein the MPQUIC connection is associated with the MA PDU session, and data of the MPQUIC connection is transmitted on a plurality of paths between the terminal apparatus and the user plane function.

39. The method according to claim 38, wherein after sending, by the session management function, the certificate application indication to the user plane function, the method further comprises:
receiving, by the session management function, an acknowledgment indication from the user plane function, wherein the acknowledgment indication indicates that the user plane function successfully requests the certificate of the user plane function.

40. The method according to claim 38 or 39, further comprising:
sending, by the session management function, a first certificate request to the certificate authority, wherein the first certificate request comprises a public key of the terminal apparatus, and the public key of the terminal apparatus is for generating a certificate of the terminal apparatus; and
receiving, by the session management function, the certificate of the terminal apparatus from the certificate authority, and sending the certificate of the terminal apparatus to the terminal apparatus, wherein the certificate of the terminal apparatus is used by the user plane function to perform authentication on the terminal apparatus in a process of establishing the MPQUIC connection.

41. The method according to claim 40, wherein before sending, by the session management function, the first certificate request to the certificate authority, the method further comprises:
sending, by the session management function, a mutual authentication indication to the terminal apparatus, wherein the mutual authentication indication indicates that an authentication manner in the process of establishing the MPQUIC connection is a mutual authentication manner; and
receiving, by the session management function, the public key of the terminal apparatus from the terminal apparatus.

42. The method according to claim 40, wherein the session establishment request comprises the public key of the terminal apparatus.

43. The method according to any one of claims 40 to 42, wherein the first certificate request further comprises an identifier of the MA PDU session, and the identifier of the MA PDU session is for determining an identifier of the certificate of the terminal apparatus.

44. The method according to any one of claims 38 to 43, further comprising:
sending, by the session management function, the identifier of the MA PDU session to the user plane function, wherein the identifier of the MA PDU session is for determining an identifier of the certificate of the user plane function.

45. The method according to any one of claims 38 to 44, wherein before sending, by the session management function, the certificate application indication to the user plane function, the method further comprises:
determining, by the session management function, to enable a function corresponding to the MPQUIC connection.

46. The method according to claim 45, wherein determining, by the session management function, to enable the function corresponding to the MPQUIC connection comprises:
receiving, by the session management function, capability information from the terminal apparatus, and determining, based on the capability information of the terminal apparatus, that the terminal apparatus supports establishment of the MPQUIC connection; and/or
supporting, by the session management function, the function corresponding to the MPQUIC connection.

47. A communication method, comprising:
sending, by a terminal apparatus, a session establishment request to a session management function, wherein the session establishment request is for requesting to establish an MA PDU session of the terminal apparatus; and
receiving, by the terminal apparatus, a certificate of a user plane function from the user plane function in a process of establishing an MPQUIC connection between the terminal apparatus and the user plane function, and performing authentication on the user plane function based on the certificate of the user plane function, wherein
the MPQUIC connection is associated with the MA PDU session, and data of the MPQUIC connection is transmitted on a plurality of paths between the terminal apparatus and the user plane function.

48. The method according to claim 47, wherein in the process of establishing the MPQUIC connection between the terminal apparatus and the user plane function, the method further comprises:
receiving, by the terminal apparatus, a certificate of the terminal apparatus from the session management function; and
sending, by the terminal apparatus, the certificate of the terminal apparatus to the user plane function, wherein the certificate of the terminal apparatus is used by the user plane function to perform authentication on the terminal apparatus.

49. The method according to claim 47 or 48, wherein the session establishment request comprises a public key of the terminal apparatus, and the public key of the terminal apparatus is used by the session management function to request the certificate of the terminal apparatus from a certificate authority; and
before sending, by the terminal apparatus, the session establishment request to the session management function, the method further comprises:
generating, by the terminal apparatus, the public key of the terminal apparatus.

50. The method according to claim 49, wherein the certificate of the terminal apparatus is carried in a radio resource control reconfiguration message.

51. The method according to claim 47 or 48, wherein the method further comprises:
receiving, by the terminal apparatus, a mutual authentication indication from the session management function, wherein the mutual authentication indication indicates that an authentication manner in the process of establishing the MPQUIC connection is a mutual authentication manner;
generating, by the terminal apparatus, a public key of the terminal apparatus based on the mutual authentication indication; and
sending, by the terminal apparatus, the public key of the terminal apparatus to the session management function, wherein the public key of the terminal apparatus is used by the session management function to request the certificate of the terminal apparatus from a certificate authority.

52. The method according to claim 51, wherein the mutual authentication indication is carried in a radio resource control reconfiguration message.

53. The method according to claim 51, wherein the method further comprises: generating, by the terminal apparatus, a private key of the terminal apparatus, wherein the private key of the terminal apparatus is used by the terminal apparatus to sign a transmitted message in the process of establishing the MPQUIC connection.

54. The method according to any one of claims 47 to 53, further comprising:
receiving, by the terminal apparatus, an identifier of the certificate of the user plane function from the user plane function; and
determining, by the terminal apparatus, that the identifier of the certificate of the user plane function is determined based on an identifier of the MA PDU session.

55. The method according to claim 54, further comprising:
sending, by the terminal apparatus, capability information of the terminal apparatus to the session management function, wherein the capability information of the terminal apparatus indicates that the terminal apparatus supports establishment of the MPQUIC connection.

56. A communication method, comprising:
receiving, by a user plane function, a certificate application indication from a session management function in a process of establishing a multiple access protocol data unit MA PDU session of a terminal apparatus, and requesting a certificate of the user plane function from a certificate authority based on the certificate application indication; and
sending, by the user plane function, the certificate of the user plane function to the terminal apparatus in a process of establishing an MPQUIC connection between the terminal apparatus and the user plane function, wherein the certificate of the user plane function is used by the terminal apparatus to perform authentication on the user plane function, wherein
the MPQUIC connection is associated with the MA PDU session, and data of the MPQUIC connection is transmitted on a plurality of paths between the terminal apparatus and the user plane function.

57. The method according to claim 56, wherein requesting, by the user plane function, the certificate of the user plane function from the certificate authority comprises:
sending, by the user plane function, a second certificate request to the certificate authority, wherein the second certificate request is for requesting the certificate of the user plane function; and
receiving, by the user plane function, the certificate of the user plane function from the certificate authority.

58. The method according to claim 56 or 57, wherein in the process of establishing the MPQUIC connection between the terminal apparatus and the user plane function, the method further comprises:
receiving, by the user plane function, a certificate of the terminal apparatus from the terminal apparatus; and
performing, by the user plane function, authentication on the terminal apparatus based on the certificate of the terminal apparatus.

59. The method according to any one of claims 56 to 58, wherein the second certificate request comprises a public key of the user plane function, and the public key of the user plane function is for determining the certificate of the user plane function; and
the method further comprises:
generating, by the user plane function, the public key of the user plane function.

60. The method according to any one of claims 56 to 59, wherein the second certificate request further comprises an identifier of the MA PDU session, and the identifier of the MA PDU session is for determining an identifier of the certificate of the user plane function; and
the method further comprises:
receiving, by the user plane function, the identifier of the MA PDU session from the session management function.

61. The method according to any one of claims 56 to 60, further comprising:
sending, by the user plane function, an acknowledgment indication to the session management function, wherein the acknowledgment indication indicates that the user plane function successfully requests the certificate of the user plane function.

62. A communication apparatus, comprising a module configured to perform the method according to any one of claims 1 to 61.

63. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 61 by using a logic circuit or by executing code instructions.

64. A computer-readable storage medium, wherein the storage medium stores a computer program or instructions; and when the computer program or the instructions are executed by a communication apparatus, the method according to any one of claims 1 to 61 is implemented.

65. A computer program product, wherein the computer program product comprises a computer program or instructions; and when the computer program or the instructions are executed by a communication apparatus, the method according to any one of claims 1 to 61 is implemented.

66. A communication system, comprising a first terminal apparatus and a first user plane function, wherein the first terminal apparatus is configured to implement the method according to any one of claims 1 to 6, and the first user plane function is configured to implement the method according to any one of claims 7 to 11.

67. A communication system, comprising at least two of the following apparatuses:
a session management function, a user plane function, a terminal apparatus, or a first function,
wherein
the session management function is configured to implement the method according to any one of claims 12 to 21, the user plane function is configured to implement the method according to any one of claims 22 to 24, the terminal apparatus is configured to implement the method according to any one of claims 25 to 32, and the first function is configured to implement the method according to any one of claims 33 to 37.

68. A communication system, comprising at least two of the following apparatuses:
a session management function, a terminal apparatus, or a user plane function, wherein
the session management function is configured to implement the method according to any one of claims 38 to 46, the terminal apparatus is configured to implement the method according to any one of claims 47 to 55, and the user plane function is configured to implement the method according to any one of claims 56 to 61.
